# EUROPÄISCHE PATENTANMELDUNG

(11) **EP 4 481 249 A1**
(43) Veröffentlichungstag der Anmeldung: **25.12.2024**
(21) Anmeldenummer: 24183740.0
(22) Anmeldetag: 21.06.2024
(51) Int. Cl.: F16K 31/00, F16K 31/02, F16K 31/04, F16K 35/02, F16K 37/00, F24D 19/10, G05D 23/275

(54) **STELLANTRIEB UND VERFAHREN ZUM VERSTELLEN VON STELLGRÖSSEN**

(30) Priorität: 23.06.2023 DE 102023116549
(71) Anmelder: Weltzer, Michael, 80797 München (DE)
(72) Erfinder: Weltzer, Michael, 80797 München (DE); Grell, Fabian, 10245 Berlin (DE)
(74) Vertreter: Gulde & Partner

(57) **Zusammenfassung**

Die Erfindung betrifft einen Stellantrieb und ein Verfahren zum Verstellen von Stellgrößen und ist anwendbar insbesondere in der Steuerungs- und Regelungstechnik, beispielsweise beim Betrieb von Heizungsanlagen.

Der Stellantrieb umfasst einen als Dehnelement (3, 4) ausgebildeten ersten Aktor sowie einen alternativ entweder als Dehnelement (14, 15) oder als Federelement (13) ausgebildeten zweiten Aktor sowie einen Mechanismus (A, B) zum Fixieren von durch einen Signalgeber (6) vorgegebenen Sollwerten mittels eines Rastsystems.

Das erfindungsgemäße Verfahren zum Verstellen von Stellgrößen basiert darauf, dass durch Dehnelemente (3, 4, 14, 15) mittels eines Signalgebers (6) als Sollwert vorgegebene Längen- und/oder Winkelwerte über Aktoren eingestellt und nachfolgend bei Erreichen des Sollwertes fixiert werden, wobei nach erfolgter Fixierung keine Energie zur Aufrechterhaltung der Fixierung benötigt wird.

## Beschreibung

Die Erfindung betrifft einen Stellantrieb und ein Verfahren zum Verstellen von Stellgrößen und ist anwendbar insbesondere in der Steuerungs- und Regelungstechnik, beispielsweise beim Betrieb von Heizungsanlagen.

In unserer modernen Gesellschaft gibt es sehr breit gefächerte Anwendungsbereiche und Anforderungsprofile für die Antriebstechnik und die Steuerung und Regelung von Antrieben, Abläufen, Prozessen und Mechanismen. Vieles wird durch Positionseinstellungen beweglicher Teile geregelt oder gesteuert - z.B. Volumenströme, Fließrichtungen und Temperaturen von flüssigen und gasförmigen Stoffen.

Nicht wenige technische Mechanismen werden von Menschen und/oder Maschinen gezielt beeinflusst. Es wird geöffnet, geschlossen, angehalten, begrenzt, initiiert, beschleunigt, etc.

Einfache, handelsübliche Stellantriebe für Heizflächen wie etwa für Fußbodenheizungen kennen nur zwei Dauerzustände. Entweder "Auf" oder "Zu". Und einer dieser beiden Zustände benötigt nach heutigem Stand der Technik über den gesamten aktiven Zeitraum elektrischen Strom oder eine andere Energieform.

So beschreibt die DE 29 48 637 A1 eine Heizungssteuerungseinrichtung mit Fußbodenheizkreisen, bei welcher in der jeweiligen Vorlaufleitung der einzelnen Heizelemente ein elektrisches Magnetventil liegt, welches von wenigstens einem räumlich gesondert von dem Heizelement in dem zu beheizenden Raum angeordneten Thermostaten für Ein- oder Mehrbereichstemperaturregelung ansteuerbar ist.

Aus der DE 10 2020 11 4284 B3 ist eine Fenstergriffkupplung mit einem Dehnstoffantrieb bekannt. Der Dehnstoffantrieb weist ein Dehnstoffelement und ein Federelement auf. Dehnt sich das Dehnstoffelement aufgrund äußerer Einflüsse aus, wird seine Ausdehnung mit dem Federelement in eine Krafteinwirkung umgewandelt, die die Fenstergriffkupplung rotiert und damit die Beschläge des Fensters öffnet.

Der Erfindung liegt die Aufgabe zugrunde, einen Stellantrieb zu schaffen, welcher vielseitig einsetzbar, einfach und kostengünstig herstellbar, mechanisch und elektrisch übersichtlich aufgebaut und energiesparend einsetzbar ist.

Der erfindungsgemäße Stellantrieb soll weiterhin den Energieverbrauch in vielen Anwendungsbereichen erheblich reduzieren, eine beliebige Anzahl von Sollwerten, Stellgrößen bzw. Positionen fixieren können und eine deutlich längere Lebensdauer als bekannte Antriebe dieser Art haben.

Das Verfahren zum Verstellen von Stellgrößen soll einen zuverlässigen und energieeffektiven Betrieb des erfindungsgemäßen Stellantriebes gewährleisten.

Diese Aufgaben werden gelöst durch die Merkmale in den Ansprüchen 1 und 4. Zweckmäßige Ausgestaltungen der Erfindung sind in den Unteransprüchen enthalten.

Der erfindungsgemäße Stellantrieb steuert durch die mechanische Bewegung eines Aktors oder eines Stellteiles wie einem Hebelarm oder einem Rad beispielsweise den Durchfluss von Gasen oder Flüssigkeiten in Röhren, oder etwa den Stellwinkel eines Flügels, oder den Hub eines Ventils und vieles andere mehr.

Die Art der Manipulation des Stellteiles - oder der Stellgröße - nach dem Prinzip des erfindungsgemäßen Stellantrieb lässt sich auf vielfältige Anwendungen übertragen.

Viele mechanische Anwendungen mit einem kurzen Stellweg und langsamen Bewegungen können von dem erfindungsgemäßen Stellantrieb über Jahrzehnte dauerhaft und energiesparend angesteuert werden.

Ein besonderer Vorteil der Erfindung besteht darin, dass die mit dem erfindungsgemäßen Stellantrieb eingestellten Sollwerte über ihren gesamten aktiven Zeitraum zu ihrer Aufrechterhaltung weder elektrischen Strom noch eine andere Energieform benötigen, indem der Stellantrieb einen als Dehnelement ausgebildeten ersten Aktor sowie alternativ entweder einen als Dehnelement oder als Federelement ausgebildeten zweiten Aktor aufweist sowie einen Mechanismus zum Fixieren von durch einen Signalgeber vorgegebenen Sollwerten mittels eines Rastsystems umfasst.

Ein weiterer Vorteil der Erfindung besteht in der Vielfalt der möglichen Realisierungsformen und Anwendungsgebiete, indem die Dehnelemente thermomechanisch oder elektromechanisch oder bionisch ausgebildet sind, wobei die Dehnelemente Volumen-/Längenänderungen bewirken und die Stellgröße nach dem Fixieren von der Volumen-/Längenänderung entkoppelt ist.

Ein wesentlicher Vorteil des erfindungsgemäßen Verfahrens besteht darin, dass durch Dehnelemente mittels eines Signalgebers als Sollwert vorgegebene Längen- und/oder Winkelwerte über Aktoren eingestellt und nachfolgend bei Erreichen des Sollwertes fixiert werden, wobei nach erfolgter Fixierung keine Energie zur Aufrechterhaltung der Fixierung benötigt wird.

Die Stellgröße wird nach dem Fixieren von der Volumen-/Längenänderung entkoppelt, und die Fixierung erfolgt mittels eines Mechanismus mit einem Rastersystem.

Durch Signale des Signalgebers wird die Fixierung aufgehoben und neue Sollwerte können eingestellt werden. Dabei kann die Fixierung mit der Deaktivierung der Dehnelemente automatisch erfolgen.

Eine optimale Verfahrensweise zum Verstellen der Stellgrößen wird dadurch erreicht, dass die Position der Aktoren erfasst und an eine Steuervorrichtung übermittelt wird und die Steuervorrichtung die Aktivitäten der Dehnelemente mit den zu regelnden Sollwerten abgleicht, wobei wenn keine Sollwerte zu verändern sind, das System passiv bleibt und dadurch Energie spart und seinen eigenen Verschleiß reduziert.

Ein bevorzugtes Anwendungsgebiet der Erfindung ist die Heizungstechnik. Ein aktiver thermischer Stellantrieb einer Fußbodenheizung z.B. verbraucht ca. 1-2,5 Watt elektrischer Energie. Eine Wohnung besitzt meist mehrere Räume, d.h. mehrere Stellantriebe, ein Haus mehrere Wohnungen, eine Stadt mehrere Häuser die gesamte Heizperiode hindurch! Dieses Beispiel der technischen Funktion/Prinzips des Stellantriebes für Fußbodenheizungen wird in vielen weiteren technischen Anwendungen, so oder ähnlich in großer Anzahl verwendet.

Das Einsparpotential von elektrischem Strom bei z.B. 25 Millionen verbauten Fußbodenheizungs-Stellantrieben in Deutschland beträgt in etwa 187.500.000 kWh verbrauchte Energie pro Jahr.

Das entspricht bei einem Durchschnittsverbrauch von 2.500kWh pro Haushalt und Jahr dem Energieverbrauch von etwa 75.000 deutschen Haushalten.

Die Idee der Erfindung beruht auf dem Prinzip der Volumen- bzw. Längenänderung von Materialen infolge der Manipulation durch äußere Einflüsse, wie sie z.B. für diverse Dehnstoffantriebe (Aktoren) typisch ist.

Dehnstoffantriebe/Aktoren im Sinne unserer Erfindung beruhen auf der Fähigkeit bestimmter Materialien ihr Volumen bzw. Länge infolge einer äußeren Einwirkung signifikant zu verändern. Typisch für solche Einflüsse sind Änderungen der Temperatur, der Feuchtigkeit oder der elektrischen Spannung. Steigen diese Werte an, so vergrößert sich zumeist auch das Volumen bzw. Länge des Materials. Fallen diese Werte, verringert sich das Volumen bzw. Länge für gewöhnlich.

Die Volumen-/Längenänderung der Dehnstoffantriebe/Aktoren steht in direkter Abhängigkeit zu dem Einfluss, der diese Änderung bewirkt. Das ist der Grund für den stetigen Energieverbrauch z.B. thermischer Stellantriebe von Fußbodenheizungen in einem der beiden Zustände "Zu" oder "Auf".

Der Kern der vorliegenden Erfindung ist die Entkoppelung der Stellgröße von ihrer direkten Ursache, der Volumen- bzw. Längenänderung eines oder mehrerer Aktoren.

Der schematische Aufbau des erfindungsgemäßen Stellantriebes lässt sich exemplarisch so beschreiben:
Es gibt einen Aktor X, z.B. einen Dehnstoffantrieb in der Form eines Zylinders oder Bandes. Wird dieser Aktor X durch ein Ereignis, z.B. durch das Einschalten von elektrischer Energie, dazu veranlasst, sich in einer bestimmten Richtung auszudehnen, dann ist er in der Lage, ein anderes Element - z.B. einen Hebel H - vor sich herzuschieben.

Wird der Stellantrieb nun durch ein zweites Ereignis, z.B. das Abschalten der elektrischen Energie, dazu veranlasst, sich in seinen ursprünglichen Zustand zusammenzuziehen, dann bleibt der Hebel H an der erreichten Position, z.B. 100% des möglichen Weges, zurück.

Der Aktor X ist mit dem Hebel H mechanisch nicht verbunden und deshalb nicht in der Lage, den Hebel H zurückzuziehen. Der Hebel H bleibt dort, wo ihn der Aktor X hingeschoben hat, bei 100% des möglichen Weges.

In dieser Position ist der Hebel H bis auf unbestimmte Zeit durch einen dazu geeigneten Mechanismus M fixiert. Er kann einen beliebigen Sollwert, in diesem Beispiel den Sollwert 100% konstant passiv fixieren. Der Stellantrieb verbraucht in diesem Zustand keine Energie. Wenn der Sollwert über einen Zeitraum konstant bleibt, dann spart man mit dem Stellantrieb genau so viel Energie, wie ein herkömmlicher aktiver Stellantrieb für das Halten dieser Position 100% benötigen würde.

In einer neuen Situation soll der Sollwert bzw. Stellgröße von 100% auf 50% reduziert werden.

Zu diesem Zweck gibt es einen zweiten Aktor Y - z.B. einen Dehnstoffantrieb oder eine Druck-bzw. Zugfeder. Der Aktor Y ist - bedingt durch seine Anordnung - in der Lage, in die entgegengesetzte Richtung von Aktor X zu wirken. Wird der Aktor Y durch ein Ereignis aktiviert, wird gleichzeitig oder zeitverzögert die Fixierung des Hebels H gelöst.

Der Aktor Y schiebt anschließend den Hebel H so lange vor sich her, bis er den Sollwert 50% erreicht hat. Ein Steuersignal, das das Erreichen des Sollwertes 50% signalisiert, schaltet die Ausdehnung des Aktoren Y ab. Der Aktor Y nimmt ggf. seine ursprüngliche Länge wieder ein. Der Hebel H hingegen fixiert sich durch den Mechanismus M in der erreichten Position und steuert den Sollwert 50% dauerhaft passiv.

Nach einiger Zeit erfordert ein neues Ereignis einen anderen Sollwert. Ist dieser neue Sollwert größer als 50%, z.B. 75%, dann stellt der Aktor X die neue Position ein. Wenn der neue Sollwert kleiner als 50% ist, dann regelt Aktor Y bis die neue Position, z.B. 25%, erreicht ist. Anschließend fixiert der Mechanismus M die neue Position.

Die Position des Hebels H fixiert der Mechanismus M in einer beliebigen Anzahl von Werten zwischen 0-100% selbstständig, sobald der Einfluss der Aktoren aussetzt und der Mechanismus M ein entsprechendes Signal erhält. Es gibt einen Sensor der die tatsächliche Position des Hebels H auslesen und an eine Steuerlogik übermitteln kann. Diese Steuerlogik gleicht die Aktivität der Aktoren X und Y mit dem zu regelnden Sollwert bzw. der Stellgröße ab. Sind keine Sollwerte zu verändern, bleibt das System passiv fixiert, spart dadurch Energie und reduziert gleichzeitig seinen eigenen Verschleiß.

Die Erfindung wird nachfolgend anhand von zumindest teilweise in den Figuren dargestellten Ausführungsbeispielen näher erläutert.

Die Figuren zeigen:
Fig. 00a den Stand der Technik mit einem ersten möglichen Sollwert
Fig. 00b den Stand der Technik mit einem zweiten möglichen Sollwert
Fig. 01a eine Prinzipdarstellung des Stellantriebes mit dem Aktor
Fig. 01b eine um 90° versetzte Darstellung zu Fig. 01a
Fig. 02a eine Prinzipdarstellung des Stellantriebes mit gelöstem Rastmechanismus
Fig. 02b eine um 90° versetzte Darstellung zu Fig. 02a
Fig. 03a eine Positionsänderung des Stellantriebes
Fig. 03b eine um 90° versetzte Darstellung zu Fig. 03a
Fig. 04a den maximal möglichen Soll-, Stell-, Steuer- bzw. Arbeitsweg
Fig. 04b eine um 90° versetzte Darstellung zu Fig. 04a
Fig. 05a einen ersten eingestellten Sollwert
Fig. 05b eine um 90° versetzte Darstellung zu Fig. 05a
Fig. 06a einen zweiten eingestellten Sollwert des Stellantriebes mit gelöstem Rastmechanismus
Fig. 06b eine um 90° versetzte Darstellung zu Fig. 06a
Fig. 07a den Rastmechanismus mit fixiertem Sollwert passiv
Fig. 07b eine um 90° versetzte Darstellung zu Fig. 07a
Fig. 08a eine Variante mit nach innen gerichteten, gegenläufig wirkenden Aktoren
Fig. 08b eine um 90° versetzte Darstellung zu Fig. 08a
Fig. 09a eine Variante mit aktivierten Energiewandlern
Fig. 09b eine um 90° versetzte Darstellung zu Fig. 09a
Fig. 10a eine Variante mit gelöstem Arbeitskolben
Fig. 10b eine um 90° versetzte Darstellung zu Fig. 10a
Fig. 11a eine Variante mit verschobenem Arbeitskolben 5
Fig. 11b eine um 90° versetzte Darstellung zu Fig. 11a
Fig. 12a eine Variante mit den Punkten P1, P2 und P3 an einer neuen Position fixiert
Fig. 12b eine um 90° versetzte Darstellung zu Fig. 12a
Fig. 13a eine Variante mit passiv fixierter Position rechts
Fig. 13b eine um 90° versetzte Darstellung zu Fig. 13a
Fig. 14a eine Variante mit passiv fixierter Position links
Fig. 14b eine um 90° versetzte Darstellung zu Fig. 14a
Fig. 15a eine Variante mit nach außen gerichteten, gegenläufig wirkenden Aktoren
Fig. 15b eine um 90° versetzte Darstellung zu Fig. 15a
Fig. 16a eine Variante mit aktivierten Energiewandlern
Fig. 16b eine um 90° versetzte Darstellung zu Fig. 16a
Fig. 17a eine Variante mit gelöstem Arbeitskolben
Fig. 17b eine um 90° versetzte Darstellung zu Fig. 17a
Fig. 18a eine Variante mit verschobenem Arbeitskolben
Fig. 18b eine um 90° versetzte Darstellung zu Fig. 18a
Fig. 19a die Realisierung des maximal möglichen Stellweges nach rechts
Fig. 19b eine um 90° versetzte Darstellung zu Fig. 19a
Fig. 20a die fixiert Position aus Fig. 19
Fig. 20b eine um 90° versetzte Darstellung zu Fig. 20a
Fig. 21a die Energiewandler und die Aktoren in ihrem passiven Zustand
Fig. 21b eine um 90° versetzte Darstellung zu Fig. 21a
Fig. 22a eine weitere passiv fixierte Position
Fig. 22b eine um 90° versetzte Darstellung zu Fig. 22a
Fig. 23a eine Variante mit nebeneinander in die gleiche Richtung wirkenden Aktoren
Fig. 23b eine um 180° versetzte Darstellung zu Fig. 23a
Fig. 24a eine Variante mit aktivierten Energiewandlern
Fig. 24b eine um 180° versetzte Darstellung zu Fig. 24a
Fig. 25a eine Variante mit freigegebenem Arbeitskolben
Fig. 25b eine um 180° versetzte Darstellung zu Fig. 25a
Fig. 26a eine Variante mit drehenden Aktoren
Fig. 26b eine um 180° versetzte Darstellung zu Fig. 26a
Fig. 27a eine Variante mit geschlossenem Rastmechanismus
Fig. 27b eine um 180° versetzte Darstellung zu Fig. 27a
Fig. 28a die Energiewandler und die Aktoren in ihrem passiven Zustand
Fig. 28b eine um 180° versetzte Darstellung zu Fig. 28a
Fig. 29a eine weitere passiv fixierte Position
Fig. 29b eine um 180° versetzte Darstellung zu Fig. 29a
Fig. 30a die Variante mit im Winkel von 90° zueinander wirkenden Aktoren
Fig. 30b eine um 180° versetzte Darstellung zu Fig. 30a
Fig. 31a die aktivierten Energiewandler
Fig. 31b eine um 180° versetzte Darstellung zu Fig. 31a
Fig. 32a eine Variante mit gelöstem Arbeitskolben
Fig. 32b eine um 180° versetzte Darstellung zu Fig. 32a
Fig. 33a eine Variante mit nach rechts drehendem Aktor
Fig. 33b eine um 180° versetzte Darstellung zu Fig. 33a
Fig. 34a eine Variante mit geschlossenem Rastmechanismus
Fig. 34b eine um 180° versetzte Darstellung zu Fig. 34a
Fig. 35a die Energiewandler Aktoren in ihrem passiven Zustand
Fig. 35b eine um 180° versetzte Darstellung zu Fig. 35a
Fig. 36a eine weitere passiv fixierte Position
Fig. 36b eine um 180° versetzte Darstellung zu Fig. 36a

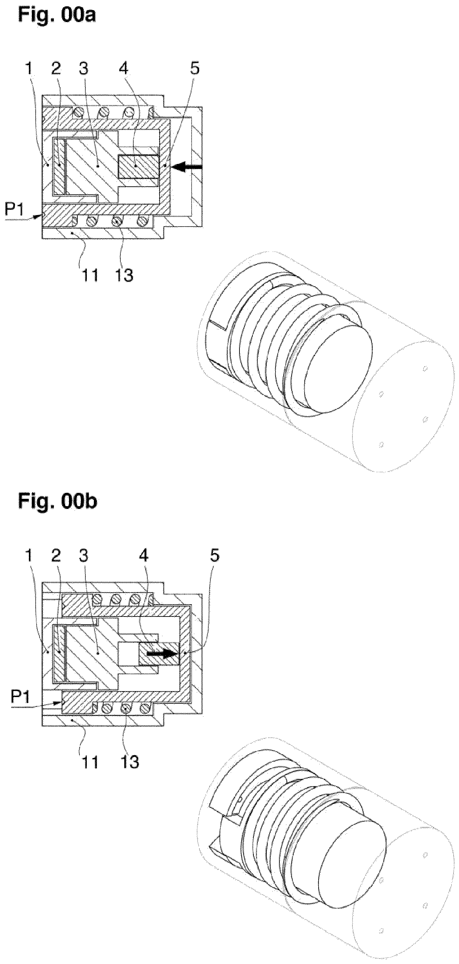

Die Figuren 00a und 00b zeigen bekannte Lösungen aus dem Stand der Technik.

Fig. 00a zeigt den Stand der Technik eines typischen thermischen Stellantriebes mit dem ersten möglichen Sollwert bzw. Stellgröße. Der Punkt P1 befindet sich bei 0 % des Stellweges.

Fig. 00b zeigt den Stand der Technik mit dem zweiten möglichen Sollwert bzw. Stellgröße. Der Punkt P1 befindet sich bei 100 % des Stellweges.

Das Halten einer der beiden dauerhaft möglichen Sollwerte bzw. Stellgrößen von P1 = 0% oder = 100% benötigt nach Stand der Technik permanent Energie.

Der erfindungsgemäße passiv, variabel, fixierende Stellantrieb wird in den nachfolgenden Ausführungsbeispielen in zwei unterschiedlichen Bauformen beschrieben.

Die Bauform Z1 arbeitet mit einem steuerbaren Aktor/Dehnelement und einem ungesteuerten, passiven Federelement als Gegenkraft. Die Bauform Z1 ist im Vergleich zur zweiten Bauform Z2 die kompaktere und wahrscheinlich auch die kostengünstigere Variante.

Die Bauform Z2 arbeitet mit zwei separat steuerbaren Aktoren/Dehnelementen. Dies ermöglicht, u.a. durch den Wegfall der permanent wirkenden Federspannung, eine genauere Steuerung der Sollwerte bzw. Stellgröße und ggf. andere Vorteile.

Je nach zu realisierender Anwendung und deren technischer Anforderungen kann zwischen den Bauformen Z1 und Z2 gewählt werden.

Für den Abgriff der mechanischen Stellfunktionen sind in allen Fig. die Punkte P1, P2 und ggf. P3 gekennzeichnet. Es gibt beliebig viele geeignete Positionen, an denen diese Stellfunktion den Anforderungen entsprechend abgenommen werden können.

### Bauform Z1

### Nr. I. - Aufbau und Funktion

Die Basis der Bauform Z1 bildet ein an der zu steuernden Anwendung fixiertes erstes Gehäuseteil 1.

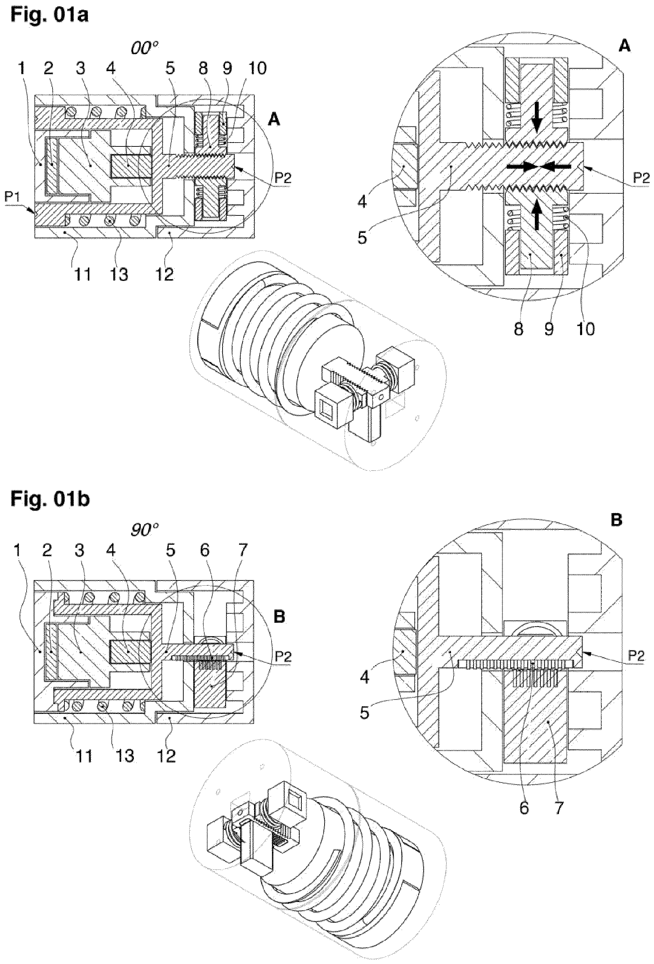

Das folgende Bauteil, der Energiewandler 2 - z.B. ein Medium mit einem höheren Energieniveau (z.B. warme Flüssigkeit, Gas etc.), ein thermoelektrisch oder induktiv arbeitendes Element - manipuliert den eigentlichen Aktor, der in den Darstellungen beispielhaft aus den abstrahierten Teilen 3 und 4 besteht. Fig. 01a - Fig. 01b

Dieser Aktor 3, 4 kann z.B. aus einem thermisch arbeitenden Dehnstoffelement bestehen. Wird dieses Dehnstoffelement z.B. durch Erwärmung der Energiequelle am Energiewandler 2 manipuliert, erfährt der Aktor 3, 4 eine deutliche Längenänderung. Im vorliegenden Ausführungsbeispiel dehnt er sich aus.

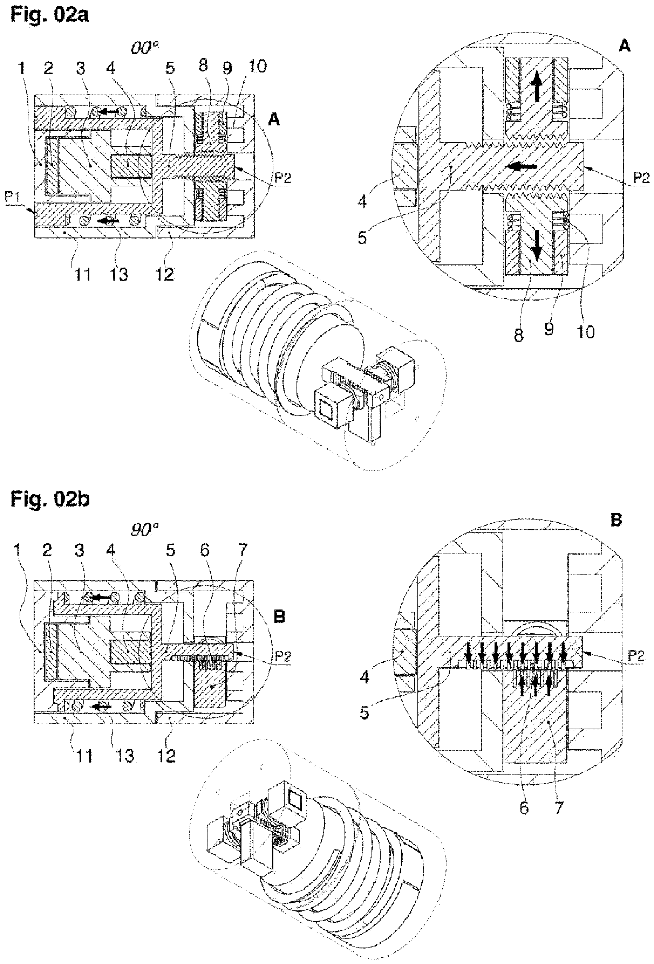

Um dies zuzulassen, muss zuvor ein Rastmechanismus A, B, beispielhaft bestehend aus den Teilen erstes Rastelement 5, zweites Rastelement 8, Rastenantrieb 9 und Rastenfeder 10 die Fixierung des Arbeitskolbens 5 lösen. Fig. 02a - Detail A

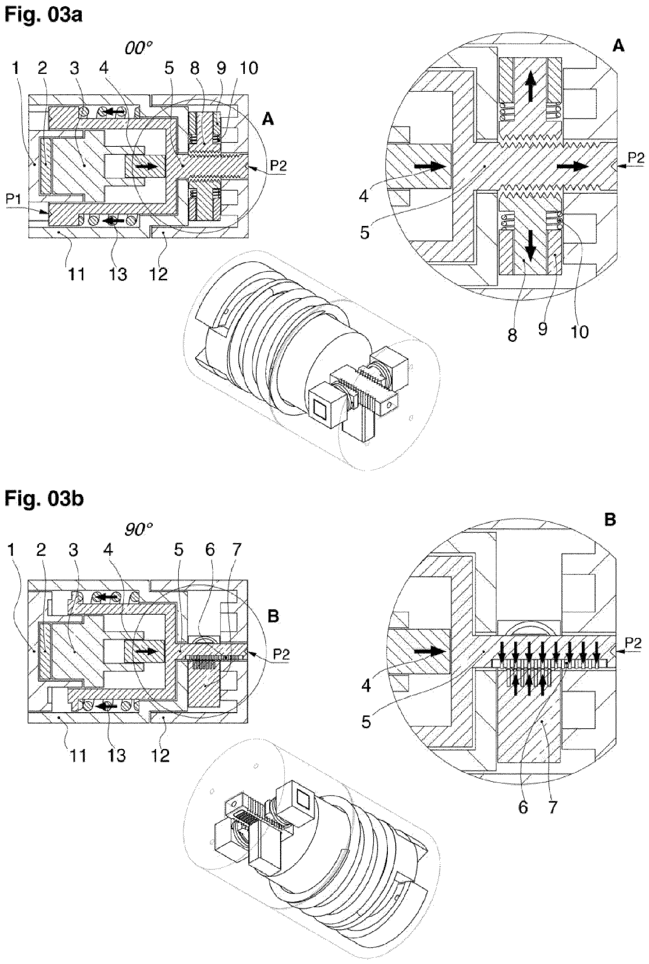

Ist der Arbeitskolben 5 frei, bewirkt die Längenänderung des Aktors 3, 4 eine Positionsänderung des Arbeitskolben 5 in eine durch die Konstruktion vorgegebene Richtung (siehe schwarze Pfeile in den Fig.). Fig. 03a

Ist die gewünschte Position - der Sollwert bzw. die Stellgröße - erreicht, wird die Energiequelle am Energiewandler 2 deaktiviert, wodurch der Aktor 3, 4 seine Wirkung einstellt. Ohne eine Fixierung würde die starke Feder 13 den Aktor 3, 4 und den Arbeitskolben 5 wieder in deren ursprüngliche Lage zurück drücken.

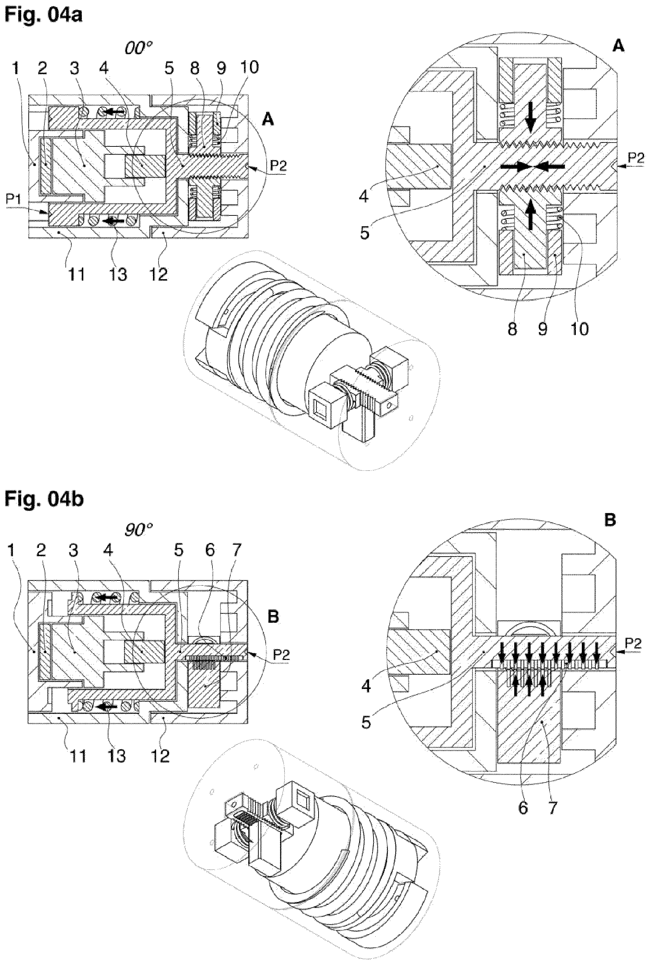

Um dieses ungewünschte Verlassen der erreichten Position/Sollwert des Arbeitskolbens 5 zu verhindern, wird er durch einen dazu geeigneten Rastmechanismus A,B mit den Teilen erstes Rastelement 5, zweites Rastelement 8, Rastenantrieb 9 und Rastenfeder 10 entgegen der dauerhaft wirkenden Federkraft der Feder 13 in der gewünschten Position fixiert. Fig. 04a

Die Abstufung der nötigen/möglichen Rastschritte der Teile erstes und zweites Rasterelement 5 und 8 wird vorrangig von der geforderten Stellgenauigkeit und den auftretenden Kräften bestimmt. Beispielhaft abgebildet sind in den Fig. 01-07 sieben mögliche Fixierpositionen bzw. Schritte.

In Fig. 04 ist exemplarisch der maximal mögliche Soll-, Stell-, Steuer- bzw. Arbeitsweg mit fixiertem Arbeitskolben 5 statisch dargestellt. Die mechanische Stellfunktion, also der Weg und die Kraft der Bauform Z1 kann beispielhaft an den Punkten P1 und P2 durch geeignete Verbindungen (nicht dargestellt) genutzt bzw. abgenommen werden.

Um die tatsächliche Position - den Istwert - des Arbeitskolben 5 unabhängig von den Abgriffspunkten P1 und P2 auslesen zu können, ist ein geeigneter Sensor, beispielhaft bestehend aus dem Geber 6 und Nehmer 7, integriert. (siehe Detail B in Fig. 01-07)

Die Werte des Sensors 6, 7 können von geeigneten Systemen (nicht dargestellt) interpretiert und zum Überwachen und Ändern der Sollwerte verwandt werden.

Der Vollständigkeit halber seien noch das zweite Gehäuseteile 11 und das dritte Gehäuseteil 12 erwähnt. Sie sind fest mit dem ersten Gehäuseteil 1 verbunden und dienen der Gesamtfunktion in unterstützender Weise. Der detaillierte Aufbau des gesamten Gehäuses kann von dem in Fig. 01-07 dargestellten Konzept abweichen.

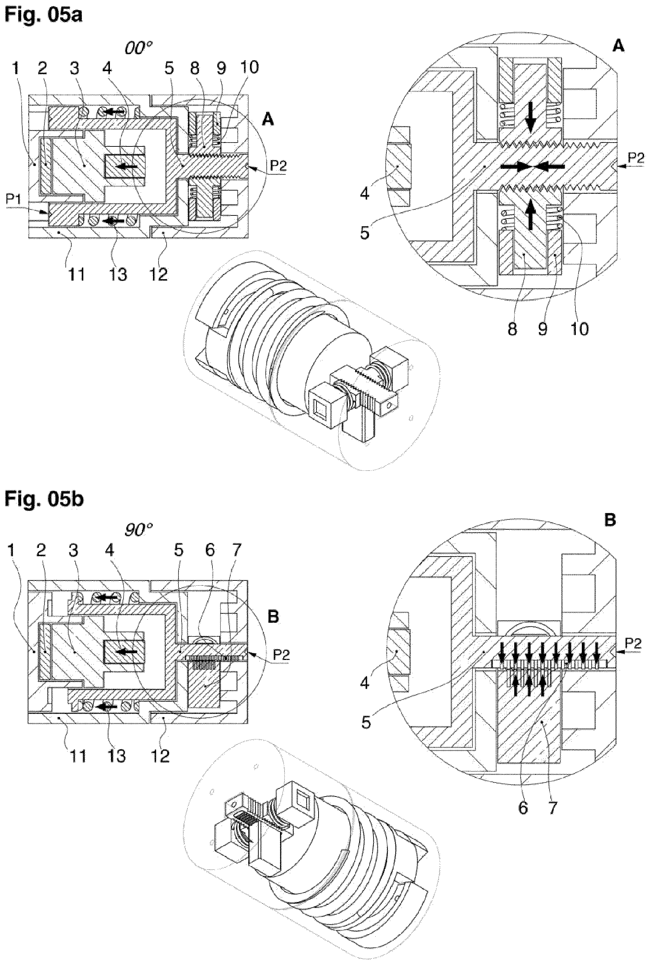

Damit ist der Ablauf eines ersten, einfachen Stellvorgangs vollständig beschrieben. Fig. 05a - Fig. 05b - zeigt den Sollwert "passiv, 100%, fixiert".

Die möglichen Realisierungen des Rastmechanismus A, B mit den Teilen erstes Rastelement 5, zweites Rastelement 8, Rastenantrieb 9 und Rastenfeder 10 und des Sensors 6, 7 werden für die Bauform Z1 und Bauform Z2 am Ende dieses Textes kurz beschrieben.

Soll in einem zweiten Schritt ein neuer Sollwert bzw. Stellgröße angesteuert werden, so muss vor dem Lösen des Rastmechanismus A, B mit den Teilen erstes Rastelement 5, zweites Rastelement 8, Rastenantrieb 9 und Rastenfeder 10 der Energiewandler 2 die Aktoren 3, 4 bis an die aktuelle Position des Arbeitskolben 5 heranführen und einen bestimmten Druck aufbauen, da die Feder 13 den Arbeitskolben 5 sonst schlagartig bis an dessen Anschlag zurück drücken würde.

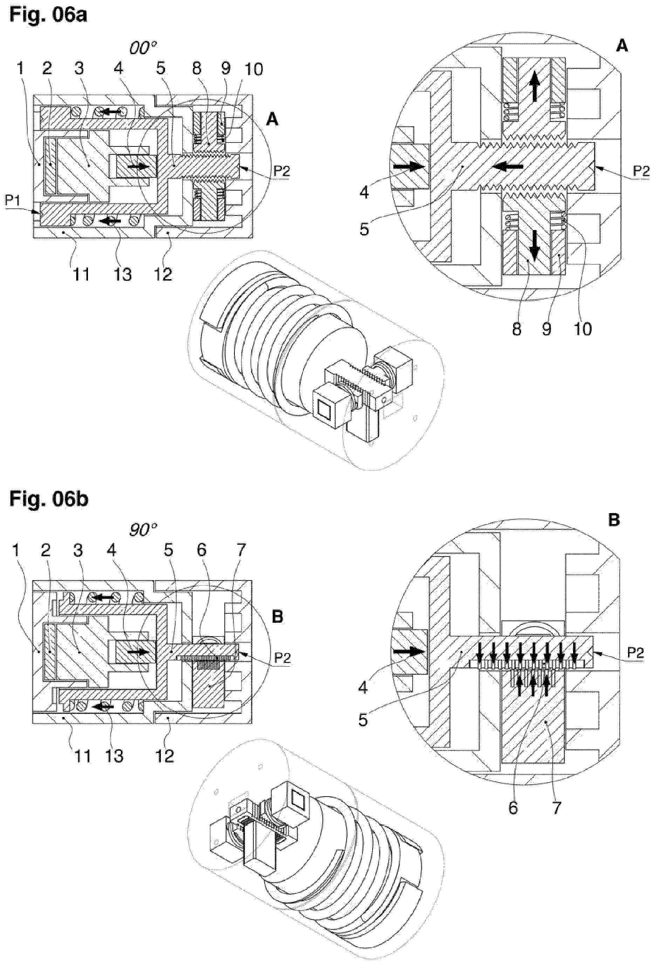

Sind die Aktoren 3, 4 an den Arbeitskolben 5 herangeführt, kann der Rastmechanismus A, B mit den Teilen erstes Rastelement 5, zweites Rastelement 8, Rastenantrieb 9 und Rastenfeder 10 gelöst und durch das Zusammenspiel von Arbeitskolben 5 und Feder 13 ein neuer Sollwert eingestellt werden. Fig. 06a - Fig. 06b

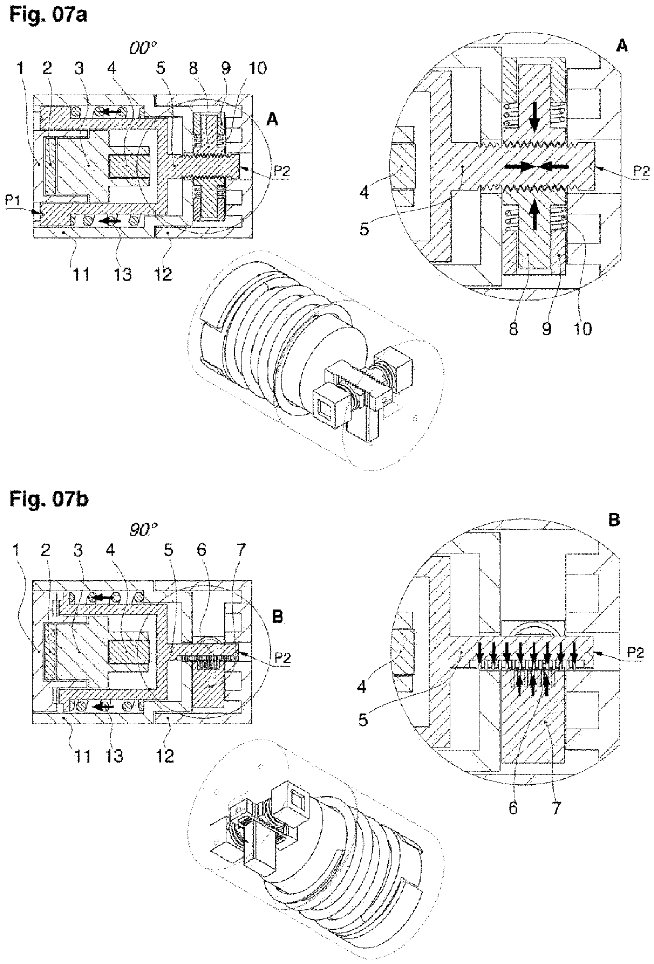

Ist die korrekte Position durch den Sensor 6, 7 erkannt, schließt sich der Rastmechanismus A, B mit den Teilen erstes Rastelement 5, zweites Rastelement 8, Rastenantrieb 9 und Rastenfeder 10 und fixiert so den neuen Sollwert z.B. bei drei von sieben möglichen Stellschritten. Fig. 07a - Fig. 07b

Jeder durch die Bauart vorgesehene Sollwert bzw. Stellgröße kann durch diesen einfachen Aufbau und Ablauf energiesparend fixiert werden.

### Bauformen Z2

Die Bauformen Z2 arbeiten anders als die Bauform Z1 nicht mit einer Feder, sondern mit einem zweiten, steuerbarem Aktor/Dehnelement. Die Vorteile der Bauformen Z2 liegen neben der ggf. präziseren Steuerung der Sollwerte auch in dem geringeren Verschleiß, der durch den Wegfall der Dauerlast der Feder erreicht werden kann.

Die Bauformen mit zwei steuerbaren Aktoren ermöglichten den Aufbau von prinzipiell gleichartigen Varianten mit unterschiedlichen Merkmalen im Detail. Dabei können z.B. die Gehäuseformen und ggf. die Stell-Charakteristika durch den jeweiligen Winkel der beiden Aktoren zueinander an die gegebenen Anforderungen angepasst werden.

Als praktikabel erscheinen die Anordnungen von zwei Aktoren in einem Winkel von 180° gegeneinander nach innen wirkend Nr. II - oder nach außen wirkend Nr. III - im Winkel von 0° nebeneinander in die gleiche Richtung wirkend Nr. IV - und im Winkel von 90° zueinander wirkend Nr. V.

Jeder andere Arbeitswinkel der Aktoren zwischen 0 - 360° zueinander ist technisch möglich und ggf. sinnvoll. Dabei sind die Stellwege beider Aktoren unabhängig voneinander ansteuerbar.

Die meisten Dehnelemente entwickeln ihre Stellkraft nur in einer Richtung, weshalb wie bei Muskeln auch, für den Rückweg ein zweites Dehnelement - oder eine Feder - benötigt wird.

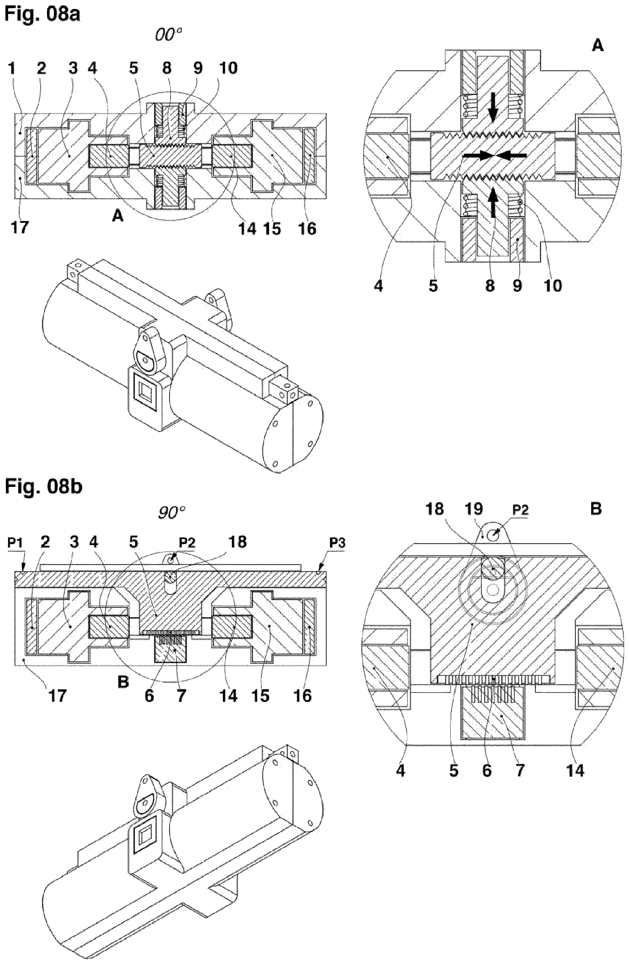

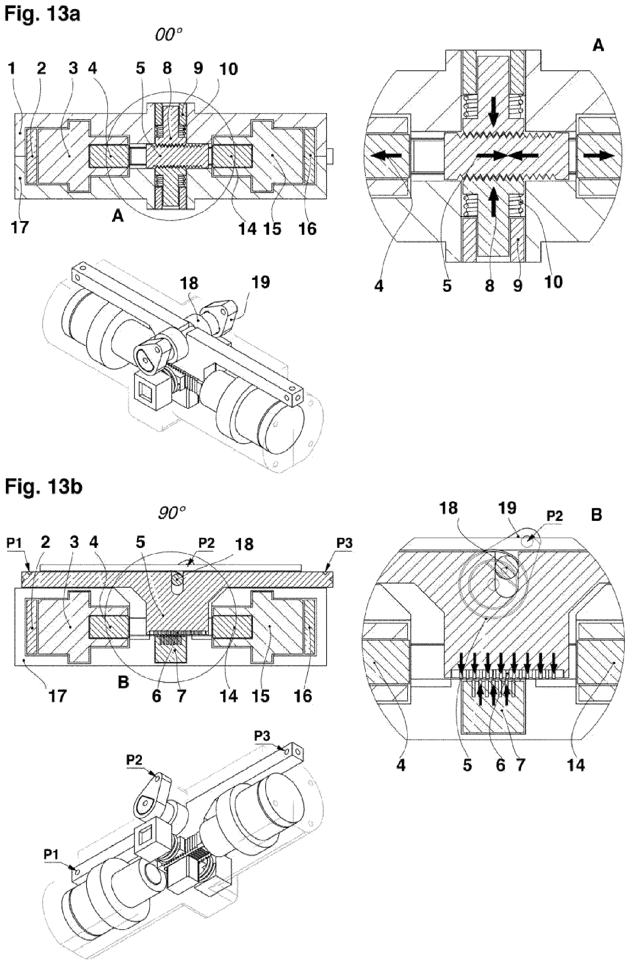

In Fig. 08-36 sind die vier genannten Bauformen Z2 in verschiedenen, sich jeweils ähnelnden Zuständen/Positionen dargestellt. Zu sehen ist, dass die Energiequellen bzw. Energiewandler 2, 16 und die Aktoren-Bauteile 3, 4, 14, 15 je zweimal vorhanden sind und auf einen jeweils unterschiedlich gestalteten Arbeitskolben 5 einwirken.

### Nr. II. - Aufbau und Funktion

Fig. 08a und 08b zeigt die Variante mit 180° nach innen gerichteten, gegenläufigen wirkenden Aktoren, bestehend aus den Aktoren 3, 4, 14, 15 im statischen Zustand. Der Sollwert ist durch den Rastmechanismus A, B mit den Teilen erstes Rastelement 5, zweites Rastelement 8, Rastenantrieb 9 und Rastenfeder 10 bei 50% des Stellweges fixiert. Die Energiewandler 2, 16 sind ohne Einfluss auf das System und die Aktoren 3, 4, 14, 15 befinden sich in einem passiven Zustand. Die Gehäuseteile erstes Gehäuseteil 1 und viertes Gehäuseteil 17 sind zum besseren Verständnis in den perspektivischen Ansichten einmalig beispielhaft dargestellt.

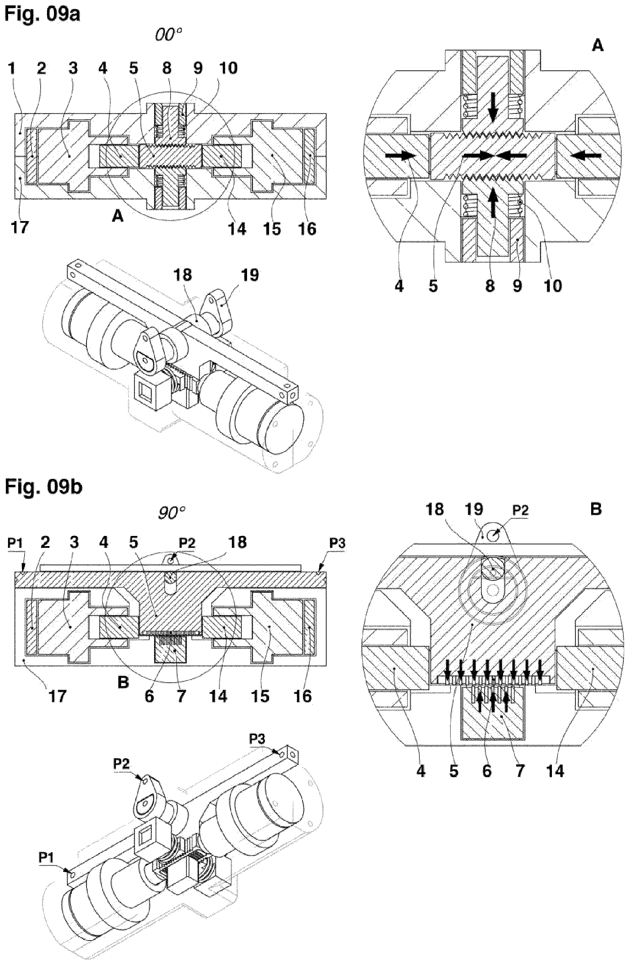

In Fig. 09a und 09b sind die Energiewandler 2, 16 aktiviert und haben die Aktoren 4, 14 an den Arbeitskolben 5 herangeführt. Der Arbeitskolben 5 bleibt fixiert. Der Sensor, bestehend aus Sensorgeber 6 und Sensornehmer 7 ist aktiviert und kann die aktuelle Position auslesen. (siehe Pfeile in Detail B) An den Punkten P1, P2 und P3 kann beispielhaft der Stellwert 50% fixiert abgenommen werden.

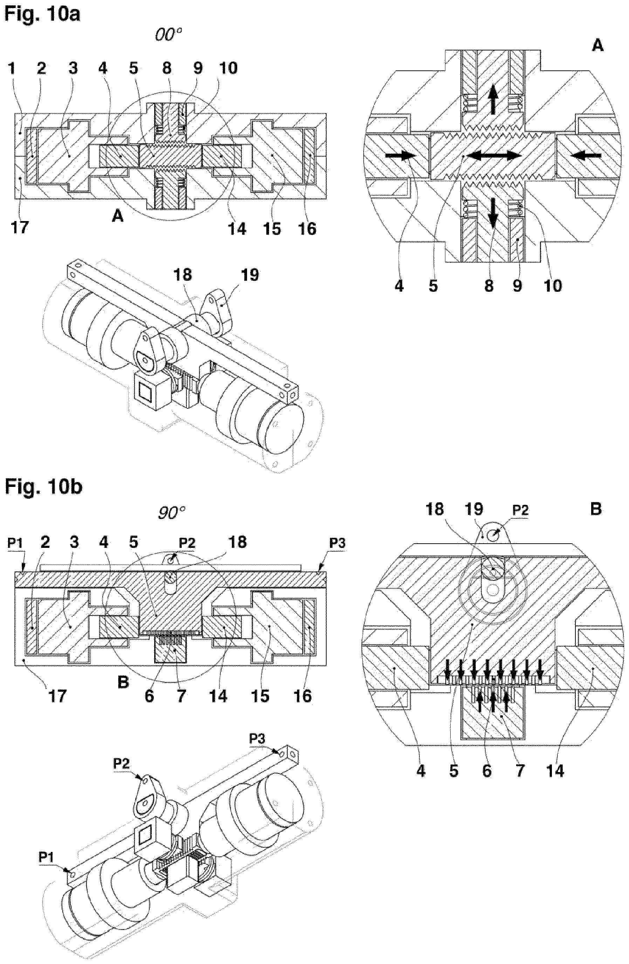

In Fig. 10a und 10b ist der Arbeitskolben 5 durch den Rastmechanismus A, B mit den Teilen erstes Rastelement 5, zweites Rastelement 8, Rastenantrieb 9 und Rastenfeder 10 freigeben/gelöst und kann durch die Einwirkung der Energiequellen / Energiewandler 2, 16 mithilfe der Aktoren 3, 4, 14, 15 an eine neue Position/Sollwert bewegt werden. Bei diesem Prozess verändern die Punkte P1, P2 und P3 ihre Position. Der Sensor 6, 7 kann über den gesamten dynamischen Prozess den Istwert auslesen.

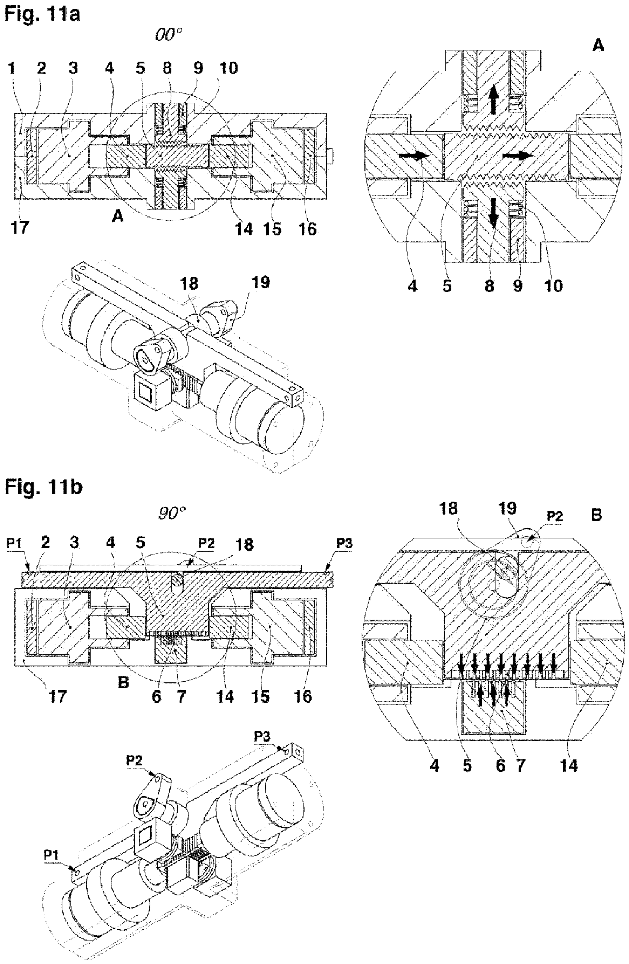

In Fig. 11a und 11b schiebt der Aktor 3, 4 bedingt durch die Einwirkung des Energiewandlers 2 den Arbeitskolben 5 nach rechts. Die Positionen der Punkte P1, P2 und P3 verändert sich und der Sensor 6, 7 liest die aktuelle Position aus (siehe Verschiebung der Pfeile in Detail B). Der Hebelarm 19 in Detail B veranschaulicht die Bewegung und die sich daraus ergebenden Möglichkeiten beispielhaft. (dargestellt ist hier das Prinzip eines Exzenters)

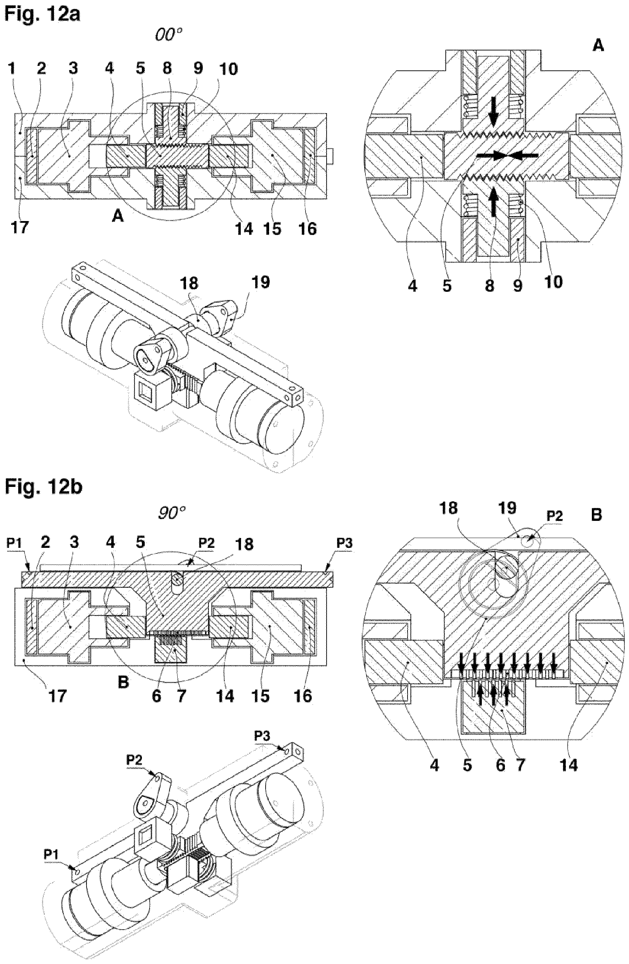

In Fig. 12a und 12b hat der Sensor 6, 7 die gewünschte Position erkannt/ausgelesen und ein Steuersignal löst den Rastmechanismus A, B mit den Teilen erstes Rastelement 5, zweites Rastelement 8, Rastenantrieb 9 und Rastenfeder 10 aus. Die Punkte P1, P2 und P3 sind an einer neuen Position fixiert.

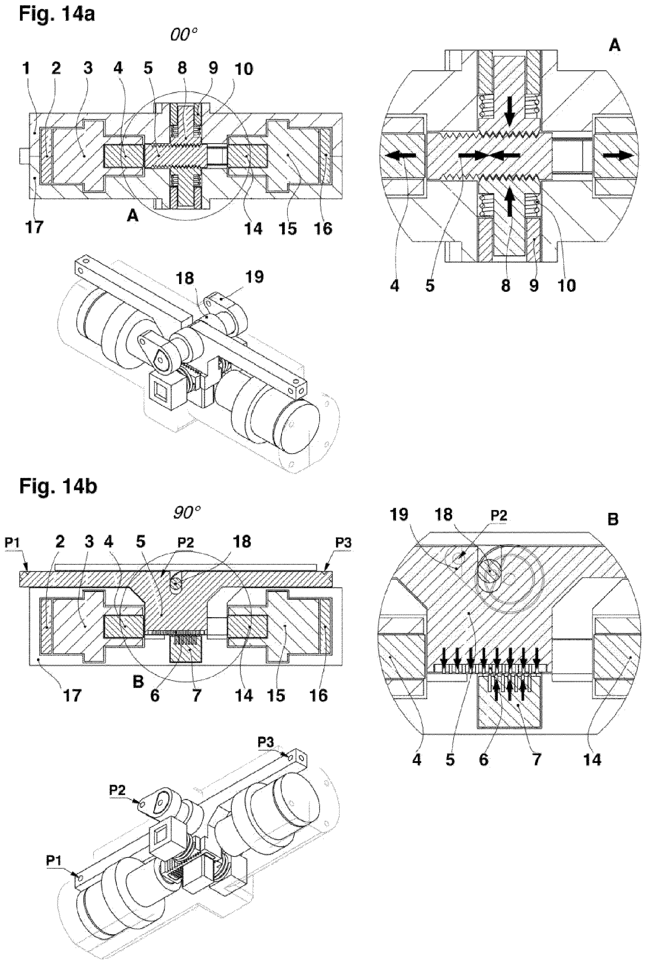

Fig. 14a und 14b zeigt eine passiv fixierte Position auf der linken Seite.

### Nr. III. - Aufbau und Funktion

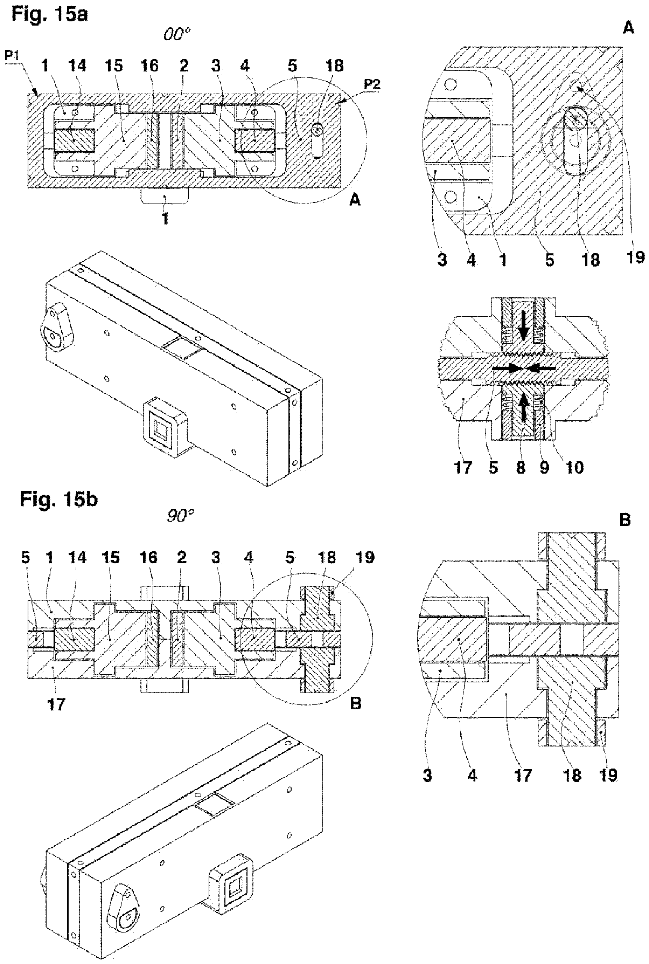

Fig. 15a und 15b zeigt die Variante mit 180° nach außen gerichteten, gegenläufig wirkenden Aktoren 3, 4, 14, 15 im statischen Zustand. Der aktuelle Sollwert bzw. Stellgröße ist durch den Rastmechanismus A, B mit den Teilen erstes Rastelement 5, zweites Rastelement 8, Rastenantrieb 9 und Rastenfeder 10 in der Mitte des möglichen Stellweges fixiert (50%). Die Energiewandler 2, 16 sind ohne Einfluss auf das System und die Aktoren 3, 4, 14, 15 befinden sich in einem passiven Zustand. Die Gehäuseteile 1, 17 sind zum besseren Verständnis in den perspektivischen Ansichten einmalig beispielhaft dargestellt.

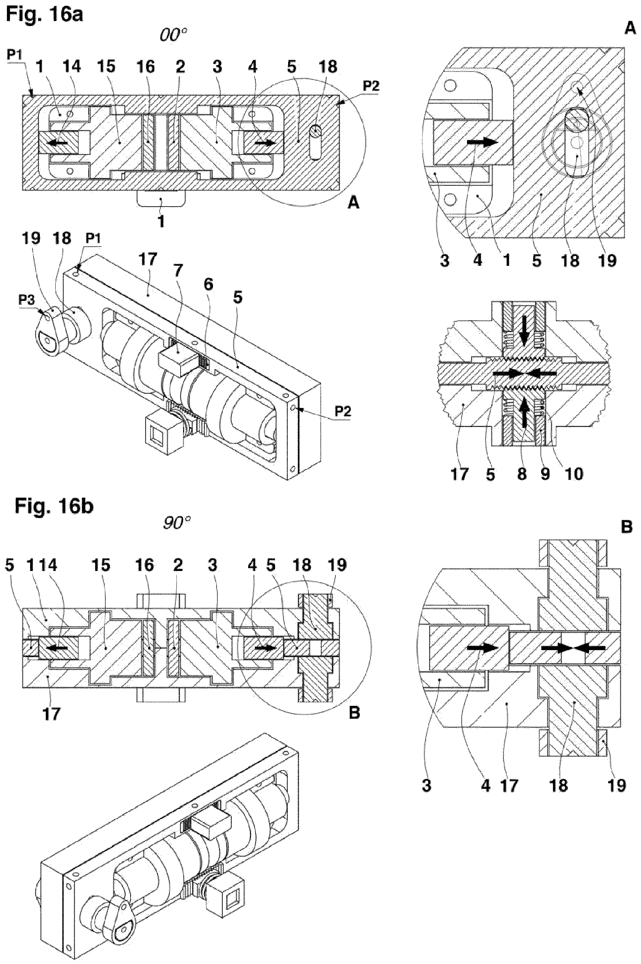

In Fig. 16a und 16b sind die Energiewandler 2, 16 aktiviert und haben die Teile 4, 14 an den Arbeitskolben 5 herangeführt. Der Arbeitskolben 5 bleibt fixiert. Der Sensor bestehend aus Geber 6 und Nehmer 7 ist aktiviert und kann die aktuelle Position auslesen. (Auf die abstrahierte Darstellung seiner Arbeitsweise durch die Pfeile wie in PVF Nr. 02 wurde hier verzichtet). An den Punkten P1, P2 und P3 kann beispielhaft der Stellwert ,50% fixiert' abgenommen werden.

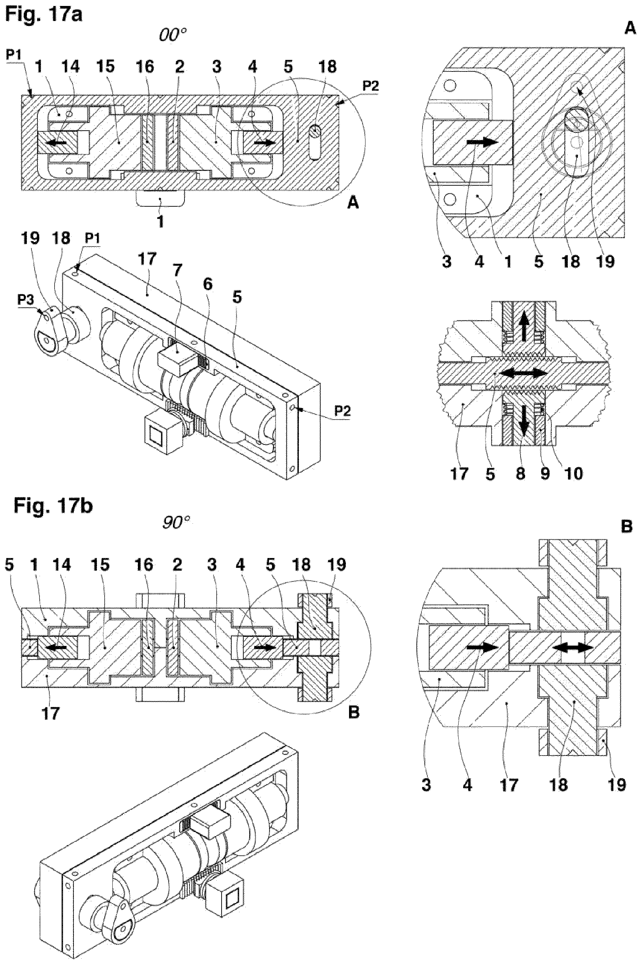

In Fig. 17a und 17b ist der Arbeitskolben 5 durch den Rastmechanismus A, B mit den Teilen erstes Rastelement 5, zweites Rastelement 8, Rastenantrieb 9 und Rastenfeder 10 freigeben/gelöst und kann durch die Einwirkung der Energiewandler 2, 16 mithilfe der Aktoren 3, 4, 14, 15 an einen neuen Sollwert bzw. Stellgröße bewegt werden. Bei diesem Prozess verändern die Punkte P1, P2 und P3 ihre Position. Der Sensor 6, 7 kann über den gesamten dynamischen Prozess den Istwert auslesen.

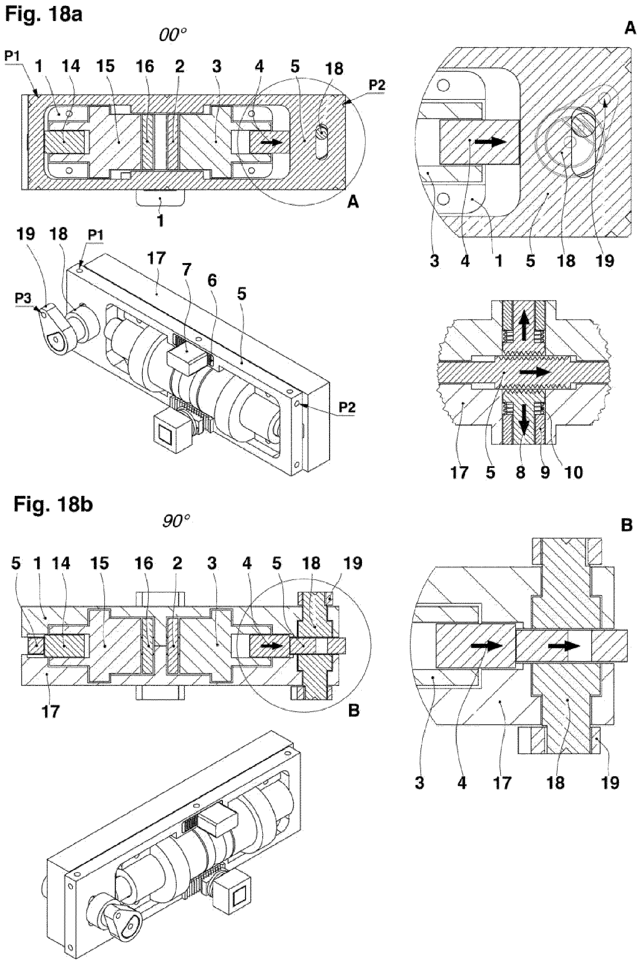

In Fig. 18a und 18b schiebt der Aktor 3, 4 bedingt durch die Einwirkung des Energiewandlers 2 den Arbeitskolben 5 nach rechts. Die Positionen der Punkte P1, P2 und P3 verändern sich und der Sensor 6, 7 liest die aktuelle Position aus. Detail B zeigt das Prinzip eines beispielhaften Exzenter-Mechanismus im Schnitt. In den Perspektivansichten veranschaulichen die Exzenter-Welle 18, der Hebelarm 19 und der Punkt P3 die Bewegung die sich durch den Einsatz des Exzenters ergibt. Die Fig. 18a und 18b zeigen etwa ¾ des möglichen Stellweges unfixiert.

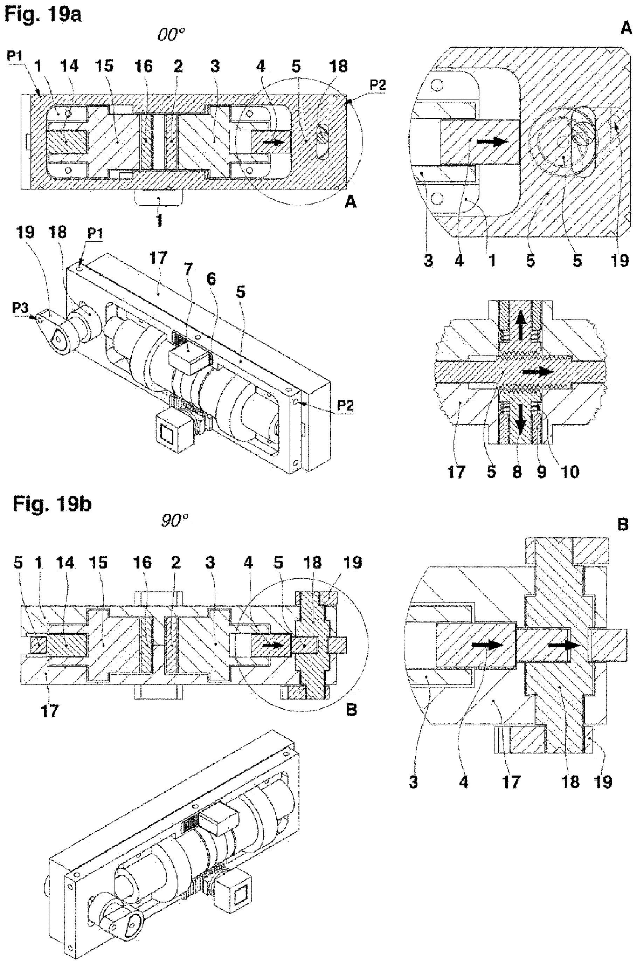

Fig. 19a und 19b stellt 100% des möglichen Stellweges nach rechts dar. Der Aufbau des Exzenters ist unter B nun gut zu erkennen. Der erste Aktor 3, 4 ist in dieser Situation der Dominante. Der zweite Aktor 14, 15 verhindert durch geringen Gegendruck, dass sich der Arbeitskolben 5 frei bewegen kann.

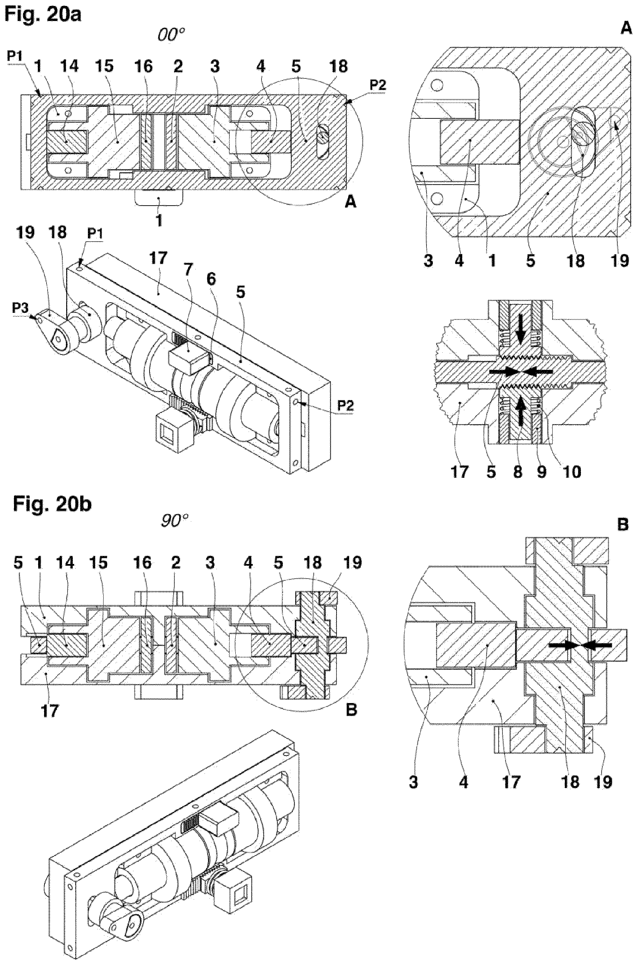

In Fig. 20a und 20b schließt sich der beispielhafte Rastmechanismus A, B mit den Teilen erstes Rastelement 5, zweites Rastelement 8, Rastenantrieb 9 und Rastenfeder 10 und fixiert die aktuelle Position 100% rechts'.

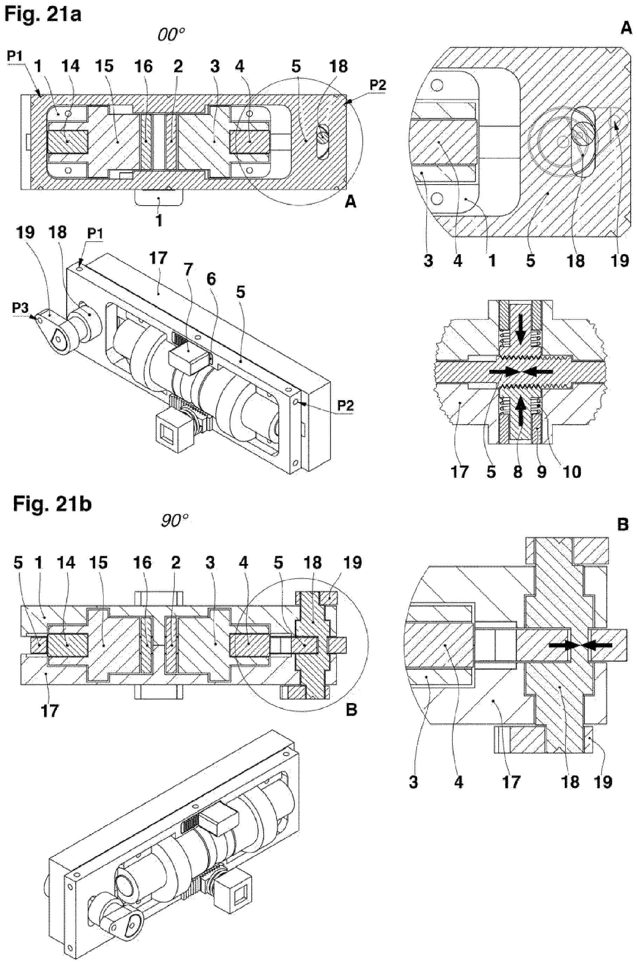

In Fig. 21a und 21b sind die Energiewandler 2, 16 und die Aktoren 3, 4, 14, 15 in ihrem passiven Zustand zu sehen. Die Punkte P1, P2 und P3 bleiben passiv fixiert, hier,100% rechts`.

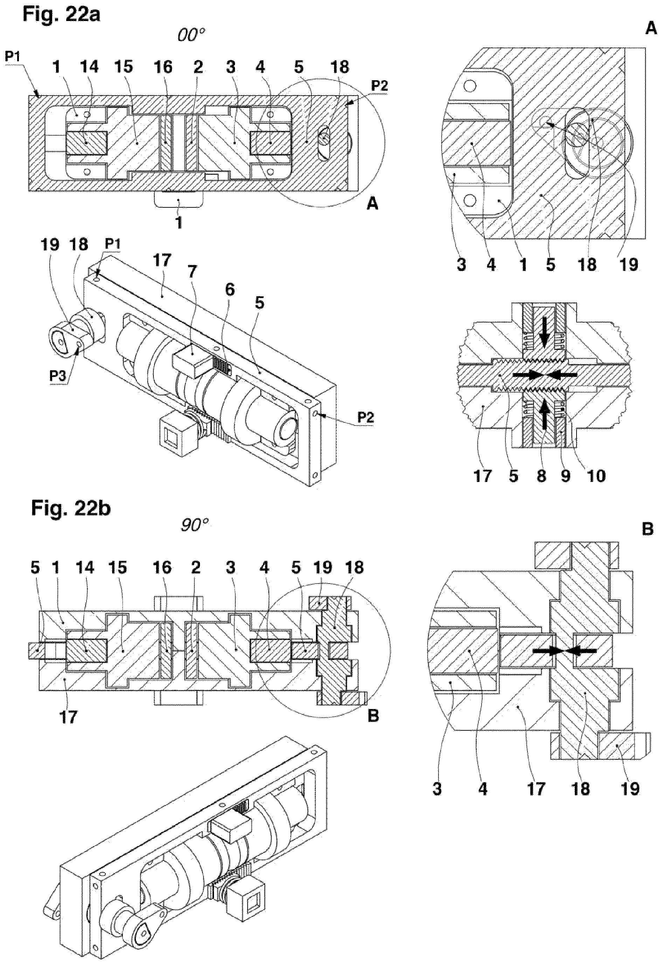

Fig. 22a und 22b zeigt die passiv fixierte Position ,100% links`.

### Nr. IV. - Aufbau und Funktion

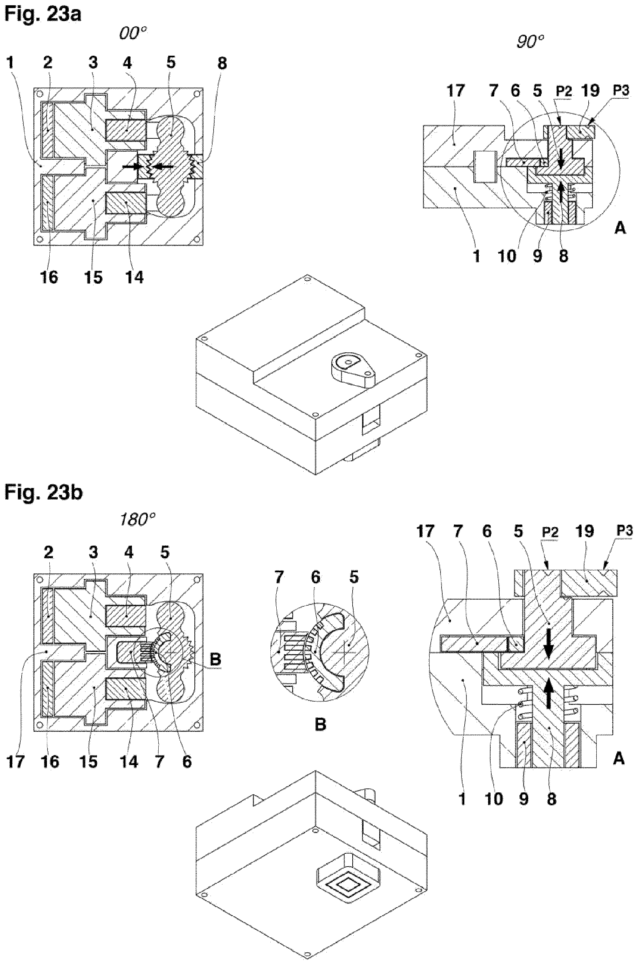

Fig. 23a und 23b zeigt die Variante mit im Winkel von 0° nebeneinander in die gleiche Richtung wirkenden Aktoren 3, 4, 14, 15 im statischen Zustand. Der aktuelle Sollwert ist durch den Rastmechanismus A, B mit den Teilen erstes Rastelement 5, zweites Rastelement 8, Rastenantrieb 9 und Rastenfeder 10 in der Mitte des möglichen Stellweges fixiert (50%). Die Energiewandler 2, 16 sind ohne Einfluss auf das System und die Aktoren 3, 4, 14, 15 befinden sich in einem passiven Zustand. Die Gehäuseteile 1, 17 sind zum besseren Verständnis in den perspektivischen Ansichten einmalig beispielhaft dargestellt.

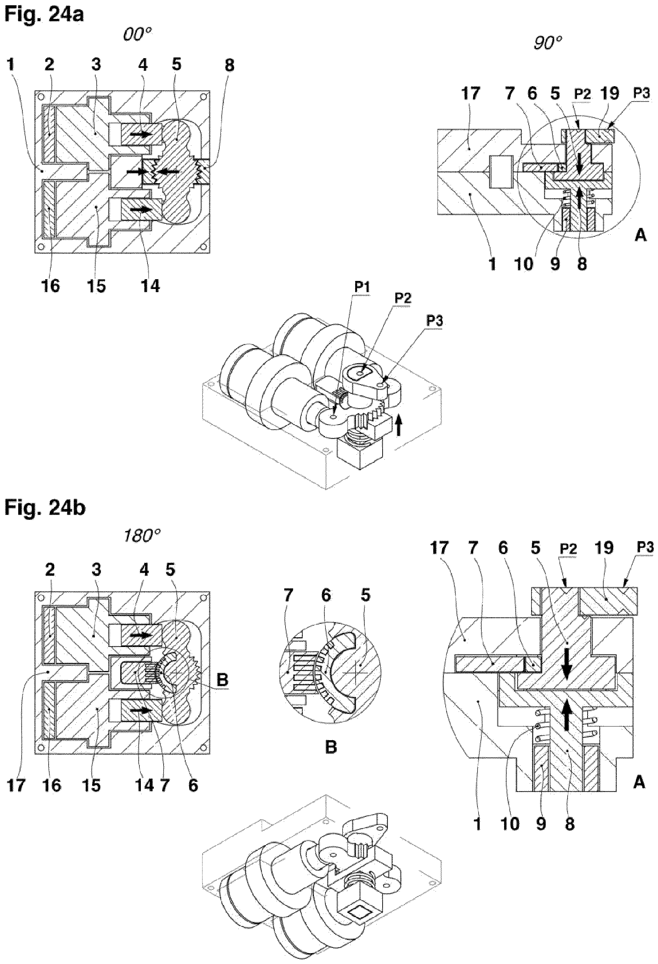

In Fig. 24a und 24b sind die Energiewandler 2, 16 aktiviert und haben die Teile 4, 14 an den Arbeitskolben 5 herangeführt. Der Arbeitskolben 5 bleibt fixiert. Der Sensor bestehend aus Sensorgeber 6 und Sensornehmer 7 ist aktiviert und kann die aktuelle Position auslesen. An den Punkten P1, P2 und P3 kann beispielhaft der Stellwert ,50% fixiert' abgenommen werden.

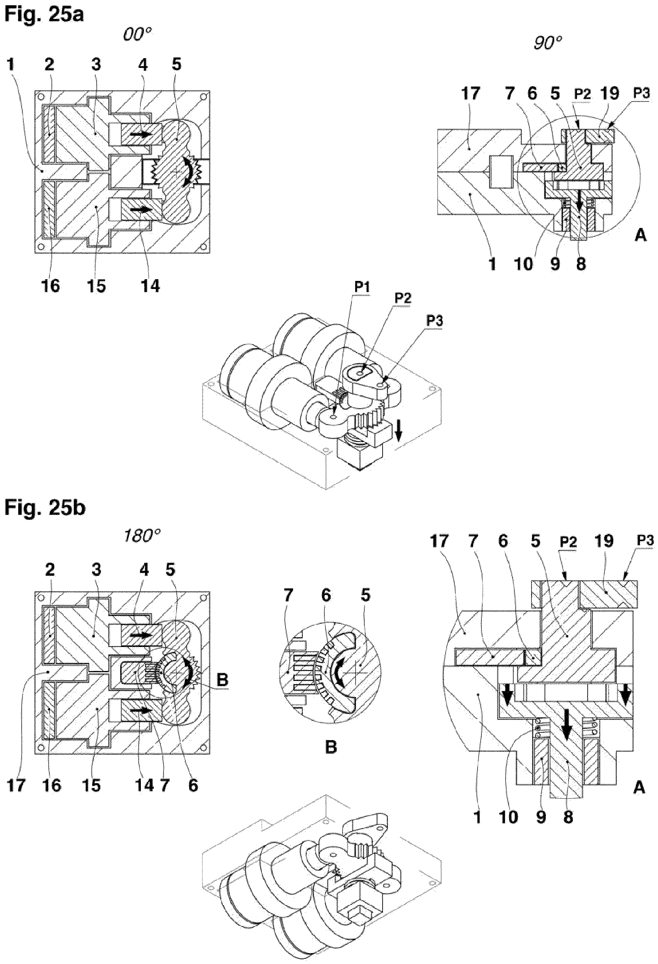

In Fig. 25a und 25b ist der Arbeitskolben 5 durch den Rastmechanismus A, B mit den Teilen erstes Rastelement 5, zweites Rastelement 8, Rastenantrieb 9 und Rastenfeder 10 freigeben/gelöst und kann durch die Einwirkung der Energiewandler 2, 16 mithilfe der Aktoren 3, 4, 14, 15 an eine neue Position/Sollwert bewegt werden. Bei diesem Prozess verändern die Punkte P1, P2 und P3 ihre Position. Der Sensor 6, 7 kann über den gesamten dynamischen Prozess den Istwert auslesen.

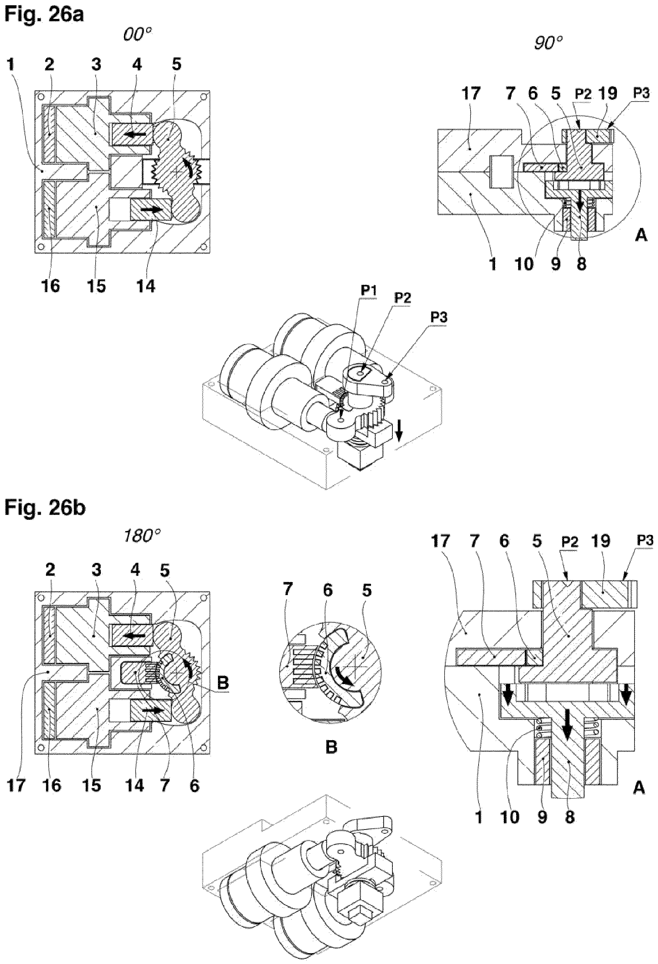

In Fig. 26a und 26b dreht der Aktor 14, 15 bedingt durch die Einwirkung der Energiequelle / Energiewandler 16 (siehe Pfeile) den Arbeitskolben 5 nach rechts. Der Arbeitskolben 5 ist in dieser Bauform axial gelagert und dreht sich um das Mittenkreuz in Fig. 26a 00°. Die Positionen der Punkte P1, P2 und P3 verändert sich und der Sensor 6, 7 liest die aktuelle Position aus. Die zwei Perspektivansichten veranschaulichen die Rotation des Hebelarms 19. Gezeigt ist hier ,100%, rechts, unfixiert' des möglichen Stellweges.

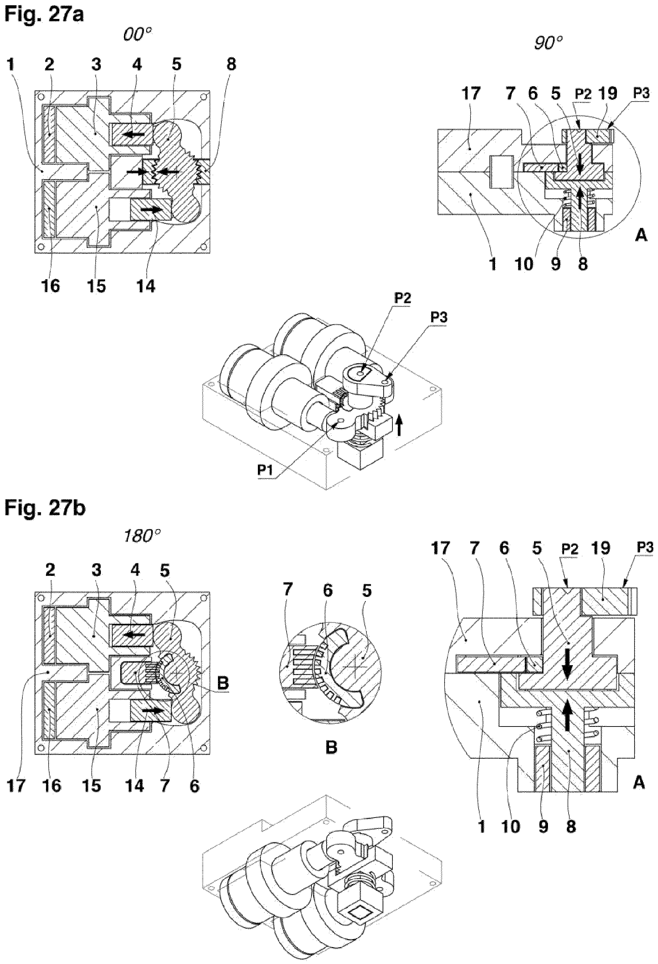

In Fig. 27a und 27b ist der Rastmechanismus A, B mit den Teilen erstes Rastelement 5, zweites Rastelement 8, Rastenantrieb 9 und Rastenfeder 10 wieder geschlossen und der Arbeitskolben 5 dadurch fixiert. Die Energiewandler 2, 16 sind noch aktiv.

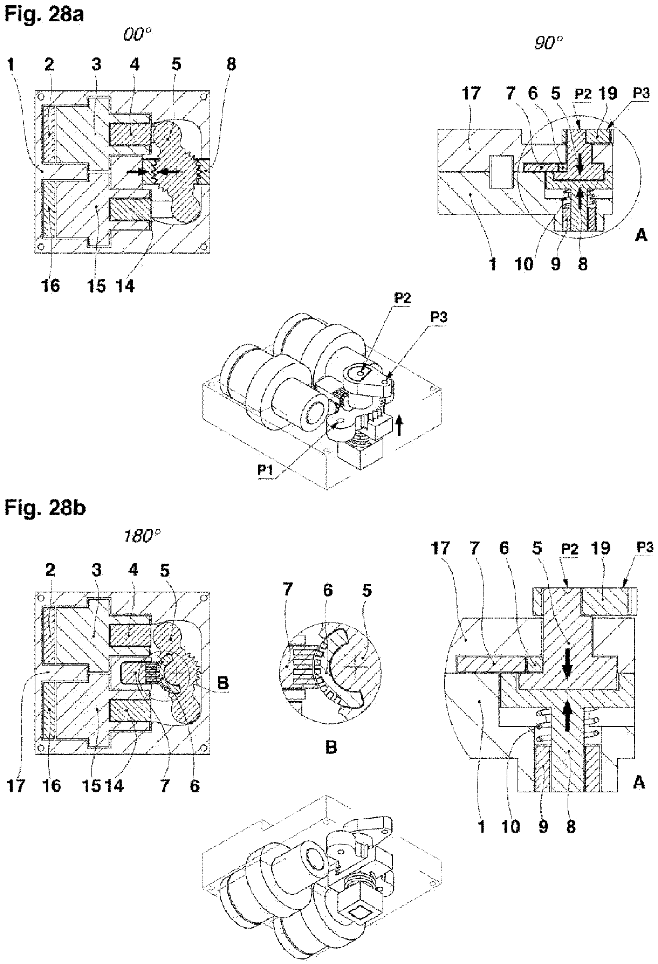

In Fig. 28a und 28b sind die Energiewandler 2, 16 und die beiden Aktoren 3, 4, 14, 15 in ihrem passiven Zustand zu sehen. Die Punkte P1, P2 und P3 bleiben passiv fixiert, hier ,100% rechts`.

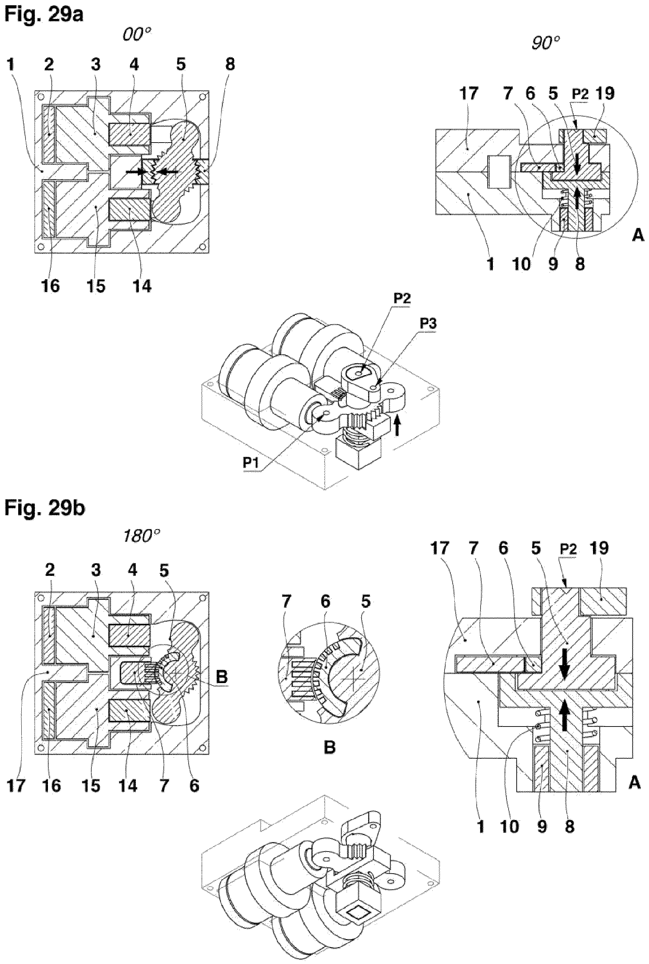

Fig. 29a und 29b zeigt die passiv fixierte Position ,100% links`.

### Nr. V. - Aufbau und Funktion

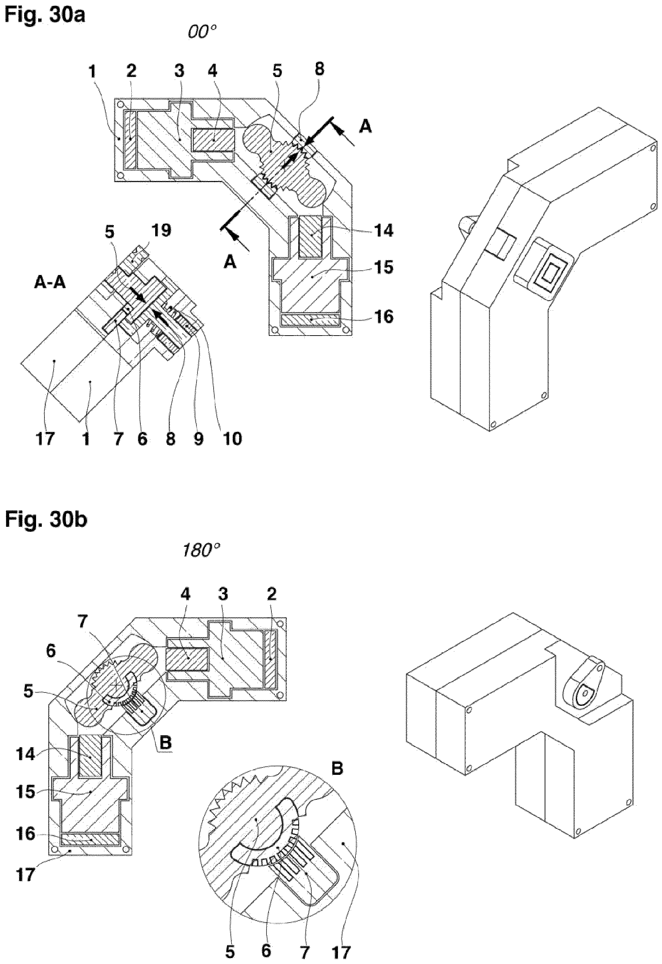

Fig. 30a und 30b zeigt die Variante mit im Winkel von 90° zueinander wirkenden Aktoren 3, 4, 14, 15 im statischen Zustand. Der aktuelle Sollwert ist durch den Rastmechanismus A, B mit den Teilen erstes Rastelement 5, zweites Rastelement 8, Rastenantrieb 9 und Rastenfeder 10 in der Mitte des möglichen Stellweges fixiert (50%). Die Energiewandler 2, 16 sind ohne Einfluss auf das System und die Aktoren 3, 4, 14, 15 befinden sich in einem passiven Zustand. Die Gehäuseteile 1, 17 sind zum besseren Verständnis in den perspektivischen Ansichten einmalig beispielhaft dargestellt.

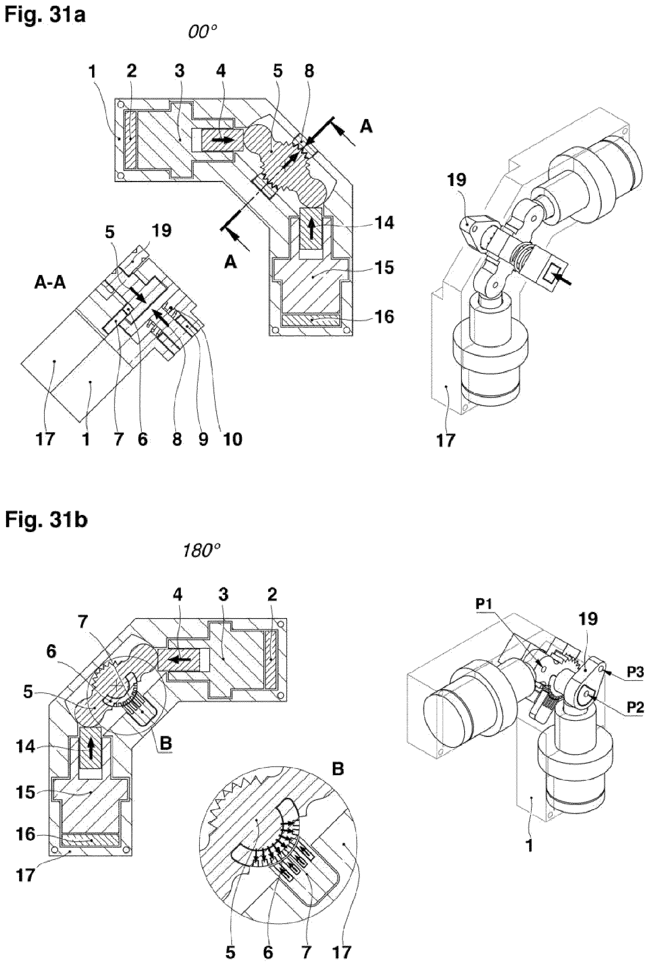

In Fig. 31a und 31b sind die Energiewandler 2, 16 aktiviert und haben die Teile 4, 14 an den Arbeitskolben 5 herangeführt. Der Arbeitskolben 5 bleibt fixiert. Der Sensor bestehend aus Sensorgeber 6 und Sensornehmer 7 ist aktiviert und kann die aktuelle Position auslesen. An den Punkten P1, P2 und P3 kann beispielhaft der Stellwert ,50% fixiert' abgenommen werden.

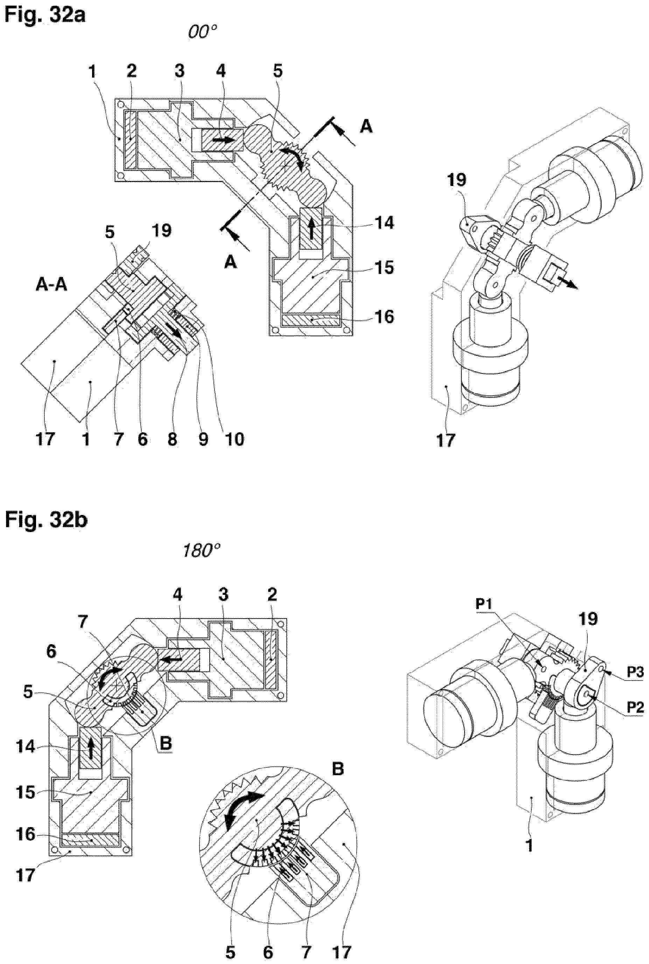

In Fig. 32a und 32b ist der Arbeitskolben 5 durch den Rastmechanismus A, B mit den Teilen erstes Rastelement 5, zweites Rastelement 8, Rastenantrieb 9 und Rastenfeder 10 freigeben/gelöst und kann durch die Einwirkung der Energiewandler 2, 16 mithilfe der Aktoren 3, 4, 14, 15 an eine neue Position/Sollwert bewegt werden. Bei diesem Prozess verändern die Punkte P1, P2 und P3 ihre Position. Der Sensor 6, 7 kann über den gesamten dynamischen Prozess den Istwert auslesen.

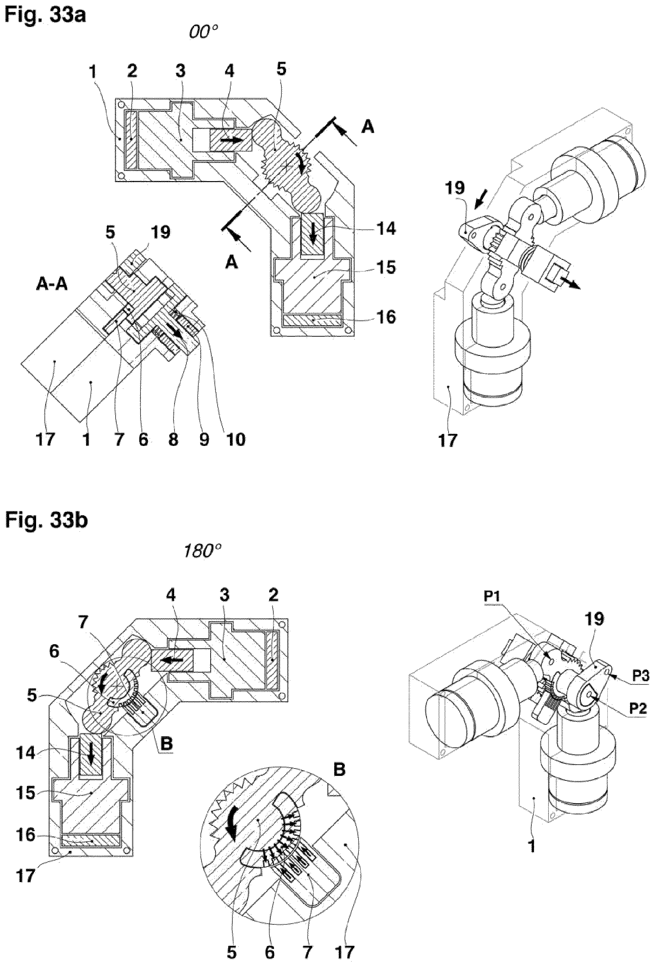

In Fig. 33a und 33b dreht der Aktor 3, 4 bedingt durch die Einwirkung der Energiewandler 2 (siehe Pfeile) den Arbeitskolben 5 nach rechts. Der Arbeitskolben 5 ist in dieser Bauform axial gelagert und dreht sich um das Mittenkreuz in Fig. 33a 00°. Die Positionen der Punkte P1, P2 und P3 verändern sich und der Sensor 6, 7 liest die aktuelle Position aus (siehe kleine symbolische Pfeile in Fig. 33b Detail B). Die zwei Perspektivansichten veranschaulichen die Rotation des Hebelarm 19. Gezeigt ist hier,100%, rechts, unfixiert' des möglichen Stellweges.

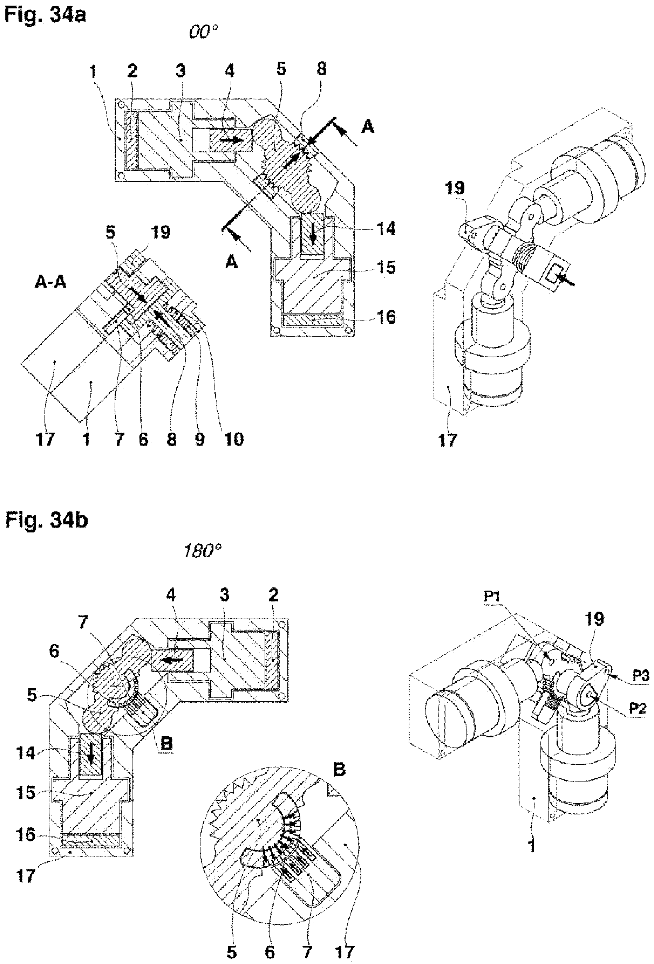

In Fig. 34a und 34b ist der Rastmechanismus A, B mit den Teilen erstes Rastelement 5, zweites Rastelement 8, Rastenantrieb 9 und Rastenfeder 10 wieder geschlossen und der Arbeitskolben 5 dadurch fixiert. Die Energiewandler 2, 16 sind noch aktiv.

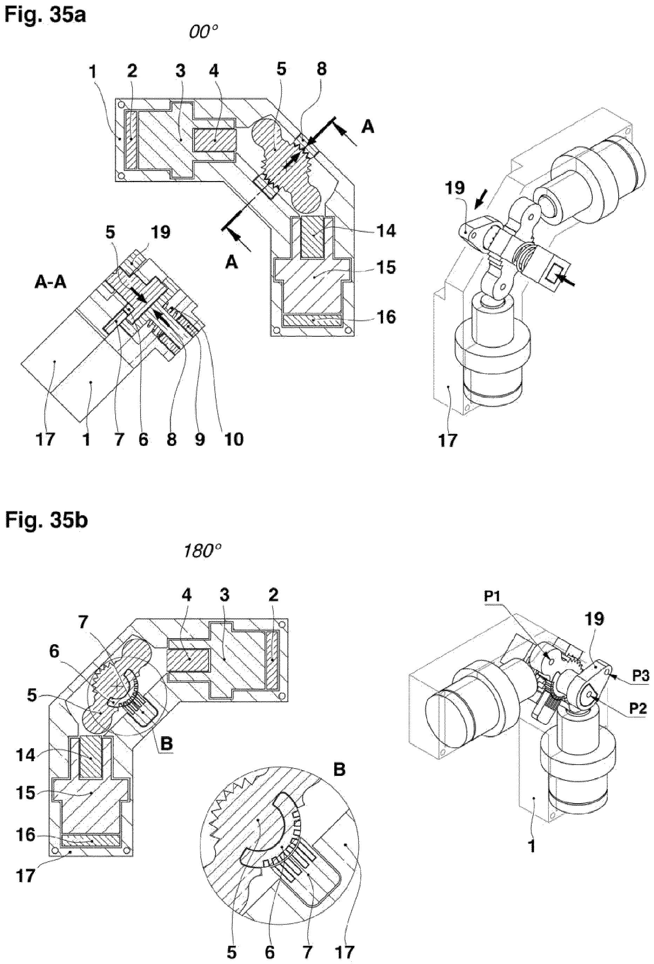

In Fig. 35a und 35b sind die Energiewandler 2, 16 und die beiden Aktoren 3, 4, 14, 15 in ihrem passiven Zustand zu sehen. Die Punkte P1, P2 und P3 bleiben passiv fixiert, hier ,100% rechts'.

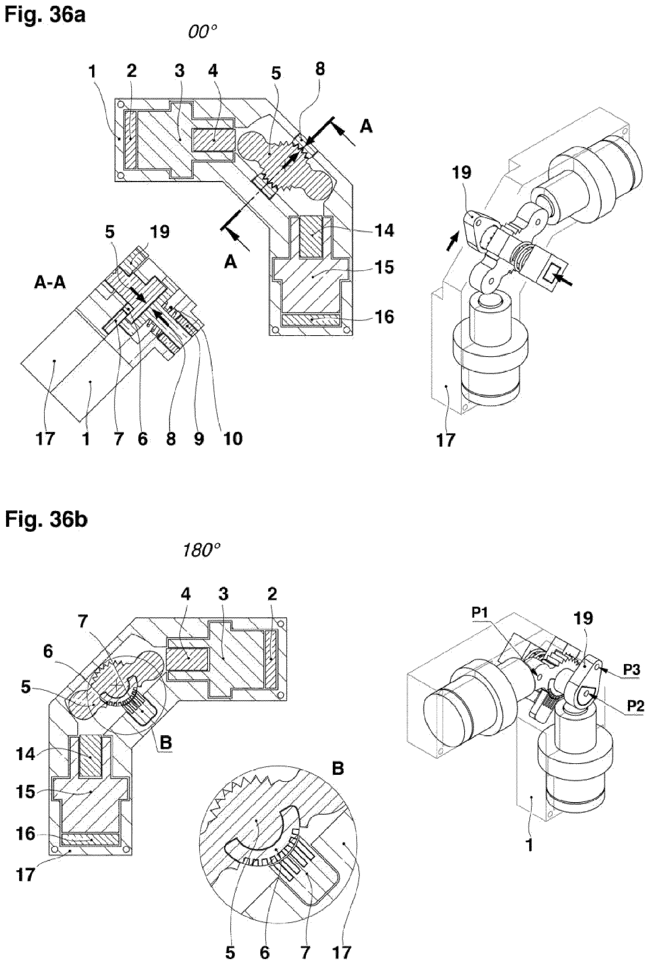

Fig. 36a und 36b zeigt die passiv fixierte Position ,100% links`.

Nachfolgend wird der Rastmechanismus A, B mit den Teilen erstes Rastelement 5, zweites Rastelement 8, Rastenantrieb 9 und Rastenfeder 10 näher beschrieben.

Das Konzept des erfindungsgemäßen Stellantriebes lässt sich in der baulichen Ausführung, seiner Stärke und Größe, den jeweiligen Anforderungen anpassen. Das typische Spektrum der Leistungsfähigkeit von z.B. thermischen Stellantrieben reicht von etwa 100 bis 1500 Newton (ca. 150 kg) Stellkraft bei einem maximalen Hub von etwa 5 bis 25 Millimeter.

Entsprechend unterschiedlich sind die Anforderungen an den Rastmechanismus oder eine adäquate Funktion, um die damit verbundenen, teils sehr großen Stellkräfte, dauerhaft zuverlässig und passiv fixieren zu können.

In der Technik wurden viele, für ganz unterschiedliche Anwendungen geeignete Rast- und Fixiermechanismen entwickelt. Einige der bekannten Rastmechanismen bieten sich für die passive Fixierung des Sollwertes an.

Zu nennen wären insbesondere die mechanischen Rastmechanismen wie sie z.B. bei verstellbaren Rohrzangen, bei Bit-Ratschen und Ratschen-Schlüsseln verwendet werden. Sie bieten ein anschauliches Beispiel für die Leistungsfähigkeit derartiger Mechanismen.

Als geeignete Antriebe für die Rastmechanismen sind die folgenden Prinzipien denkbar:
- Magnetspulen mit beweglichem Metallkern und Feder wie sie z.B. in elektrischen Türschlössern verwendet werden
- pneumatische und hydraulische Aktoren
- Mechanismen, die auf der Basis von Bi- oder Formgedächtnis Metallen basieren
- bionische Aktoren

Der prototypische Ablauf eines Rastvorganges lässt sich wie folgt beschreiben:
Der Rastmechanismus kann beispielsweise aus einem linearen Zahnprofil - wie am Arbeitskolben 5 zu sehen - und einem dazu passenden Gegenstück Rastelement 8 bestehen. Solange das System fixiert/passiv ist, wird das Gegenstück Rastelement 8 z.B. durch eine Feder 10 in das Zahnprofil des Arbeitskolben 5 gedrückt oder gezogen und blockiert so passiv die Änderung des Sollwertes bzw. Stellgröße. /Fig. 08a Detail A

Zum Verändern des Sollwertes wird die Fixierung dadurch gelöst, dass das Gegenstück 8 durch einen geeigneten Rastenantrieb 9, z.B. eine elektrische Spule, aus dem Zahnprofil des Arbeitskolben 5 herausgezogen oder geschoben wird. Das lineare Zahnprofil des Arbeitskolbens 5 kann sich nun im Rahmen seiner konstruktiven Vorgaben bewegen. / Fig. 10a Detail A

Ist der Sollwert erreicht, wird der Antrieb des Rastmechanismus A, B - hier beispielhaft durch die Teile erstes Rastelement 5, zweites Rastelement 8, Rastenantrieb 9 und Rastenfeder 10 dargestellt - deaktiviert und das Gegenstück Rastelement 8 rastet unter Einwirkung der Rastenfeder 10 in das lineare Zahnprofil des Arbeitskolben 5 ein. Das Gesamtsystem ist wieder passiv fixiert. / Fig. 12a Detail A

Nachfolgend wird der Sensor - beispielhaft bestehend aus den Teilen Sensorgeber 6 und Sensornehmer 7 - näher beschrieben.

Der Sensor 6, 7 dient allgemein der Feststellung der aktuellen, tatsächlichen Position des Arbeitskolben 5 mit den Punkten P1, P2, P3 und dem Abgleich des Istwertes mit dem Sollwert bzw. Stellgröße.

Die Vielzahl der möglichen Bauformen, Größen und Anwendungen des erfindungsgemäßen Stellantriebes lassen eine genaue Beschreibung des oder der Sensoren 6, 7 nicht zu. Seine Ausführung kann, wie der Rastmechanismus A, B, sehr unterschiedlich gestaltet sein.

Es gibt verschieden Arten von Sensoren, die sich für die beschriebene Aufgabe anbieten. Eine geeignete Sensorgruppe ist sicher die der resistiv arbeitenden Sensoren, also Sensoren die z.B. die Änderung von elektrischem Widerstand messen können.

Aber auch jede andere, wie z.B. mechanische, kapazitive, induktive, magnetische, piezoelektrische, thermoelektrische oder optische Arbeitsweise ist denkbar und ggf. sinnvoll.

Darüber hinaus sind für viele Sensortypen auch verschiedene Bauformen, z.B. Dreh- und Schieberegler bekannt. Bevorzugt zu betrachten sind hier besonders verschleißarme und langlebige Ausführungen. Die Sensorgruppe ist z.B. in Fig. 09b in Detail B und den folgenden beispielhaft dargestellt.

Dem Sensor nachgeschaltet ist eine jeweils geeignete Signalaufbereitung/Auswertung durch unterschiedliche, zumeist aber elektrische/elektronische Systeme. Eine LogikEinheit' die die Signale des Sensors liest, regelt den Sollwert bzw. Stellgröße für P1, P2, P3.

Die Erfindung ist nicht beschränkt auf die dargestellten Ausführungsvarianten. Vielmehr ist es möglich, durch Kombination und Variation der aufgezeigten Mittel und Merkmale weitere Ausführungsvarianten zu realisieren, ohne den Rahmen der Erfindung zu verlassen.

### Bezugszeichen

- 1: - erstes Gehäuseteil
- 2, 16: - Energiewandler
- 3, 15: - Aktor fix
- 4, 14: - Aktor beweglich
- 5: - Arbeitskolben mit erstem Rastelement
- 6: - Sensor Geber
- 7: - Sensor Nehmer
- 8: - zweites Rastelement
- 9: - Rasten-Antrieb
- 10: - Rasten-Feder
- 11: - zweites Gehäuseteil
- 12: - drittes Gehäuseteil
- 13: - Federelement
- 17: - viertes Gehäuseteil
- 18: - Exzenter-Welle
- 19: - Hebelarm
- A, B: - Rastmechanismus
- P1, P2, P3: - Abgriffspunkte

## Patentansprüche

1. Stellantrieb zum Verstellen von Stellgrößen umfassend
einen als Dehnelement (3,4) ausgebildeten ersten Aktor sowie einen alternativ entweder als Dehnelement (14, 15) oder als Federelement (13) ausgebildeten zweiten Aktor sowie einen Mechanismus (A, B) zum Fixieren von durch einen Signalgeber (6) vorgegebenen Sollwerten mittels eines Rastsystems.

2. Stellantrieb nach Anspruch 1, **dadurch gekennzeichnet, dass**
die Dehnelemente (3, 4, 14, 15) thermomechanisch oder elektromechanisch oder bionisch ausgebildet sind.

3. Stellantrieb nach Anspruch 1 oder 2, **dadurch gekennzeichnet, dass** die Dehnelemente (3, 4, 14, 15) Volumen-/Längenänderungen bewirken und die Stellgröße nach dem Fixieren von der Volumen-/Längenänderung entkoppelt ist.

4. Verfahren zum Verstellen von Stellgrößen, wobei durch Dehnelemente (3, 4, 14, 15) mittels eines Signalgebers (6) als Sollwert vorgegebene Längen- und/oder Winkelwerte über Aktoren eingestellt und nachfolgend bei Erreichen des Sollwertes fixiert werden, wobei nach erfolgter Fixierung keine Energie zur Aufrechterhaltung der Fixierung benötigt wird.

5. Verfahren zum Verstellen von Stellgrößen nach Anspruch 4, **dadurch gekennzeichnet, dass** die Stellgröße nach dem Fixieren von der Volumen-/ Längenänderung entkoppelt wird.

6. Verfahren zum Verstellen von Stellgrößen nach Anspruch 4, **dadurch gekennzeichnet, dass** die Fixierung durch den Mechanismus (A, B) mit einem Rastersystem (5, 8, 9, 10) erfolgt.

7. Verfahren zum Verstellen von Stellgrößen nach einem der Ansprüche 4 bis 6, **dadurch gekennzeichnet, dass** durch Signale des Signalgebers (6) die Fixierung aufgehoben wird und neue Sollwerte einstellbar sind.

8. Verfahren zum Verstellen von Stellgrößen nach einem der Ansprüche 4 bis 7, **dadurch gekennzeichnet, dass** die Fixierung automatisch erfolgt mit Deaktivierung der Dehnelemente (3, 4 ,14, 15).

9. Verfahren zum Verstellen von Stellgrößen nach einem der Ansprüche 4 bis 8, **dadurch gekennzeichnet, dass** die Position der Aktoren erfasst und an eine Steuervorrichtung übermittelt wird.

10. Verfahren zum Verstellen von Stellgrößen nach Anspruch 9, **dadurch gekennzeichnet, dass** die Steuervorrichtung die Aktivitäten der Dehnelemente (3, 4, 14, 15) mit den zu regelnden Sollwerten abgleicht, wobei wenn keine Sollwerte zu verändern sind, das System passiv bleibt und dadurch Energie spart und seinen eigenen Verschleiß reduziert.
